(19) Europäisches Patentamt
European Patent Office
Office européen des brevets

(11) **EP 2 661 008 A1**

(12) **EUROPEAN PATENT APPLICATION**

(43) Date of publication:
**06.11.2013 Bulletin 2013/45**

(51) Int Cl.:
*H04L 5/00* (2006.01)     *H04B 7/06* (2006.01)
*H04B 7/04* (2006.01)     *C08F 214/18* (2006.01)

(21) Application number: **13020068.6**

(22) Date of filing: **13.08.2009**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **20.08.2008 US 90434 P**
**22.04.2009 US 428129**

(62) Document number(s) of the earlier application(s) in accordance with Art. 76 EPC:
**09791473.3 / 2 329 619**

(71) Applicant: **Qualcomm Incorporated**
**San Diego, CA 92121-1714 (US)**

(72) Inventors:
• **Van Nee, Didier Johannes Richard**
**San Diego, CA 92121 (US)**

• **Van Zelst, Albert**
**San Diego, CA 92121 (US)**
• **Awater, Geert Arnout**
**San Diego, CA 92121 (US)**

(74) Representative: **Carstens, Dirk Wilhelm et al**
**Wagner & Geyer**
**Gewürzmühlstrasse 5**
**80538 München (DE)**

Remarks:
This application was filed on 29-07-2013 as a divisional application to the application mentioned under INID code 62.

(54) **Preamble extensions for communications**

(57)     Systems and/or methods for communication that generate a plurality of spatial streams are disclosed. Each of the spatial streams comprises a plurality of symbols. At least a portion of a training sequence is distributed across a first symbol in a first one of the spatial streams and a second symbol in a second one of the spatial streams.

FIG. 16

**Description**

**CROSS-REFERENCE TO RELATED APPLICATIONS**

**Claim of Priority under 35 U.S.C. §119**

The present Application for Patent claims priority to Provisional Application No. 61/090,434, entitled "PREAMBLE EXTENSIONS" filed August 20, 2008, and assigned to the assignee hereof and hereby expressly incorporated by reference herein.

**BACKGROUND**

**I. Field**

The following description relates generally to communication systems, and more particularly to Preamble Extensions.

**II. Background**

In order to address the issue of increasing bandwidth requirements that are demanded for wireless communications systems, different schemes are being developed to allow multiple user terminals to communicate with a single access point by sharing channel resources while achieving high data throughputs. Multiple Input, Multiple Output (MIMO) technology represents one such approach that has recently emerged as a popular technique for next generation communication systems. MIMO technology has been adopted in several emerging wireless communications standards such as the Institute of Electrical Engineers (IEEE) 802.11 standard. IEEE 802.11 denotes a set of Wireless Local Area Network (WLAN) air interface standards developed by the IEEE 802.11 committee for short-range communications (e.g., tens of meters to a few hundred meters).

The new 802.11 VHT (Very High Throughput) is a new standard, which operates in MIMO mode. MIMO technology may be used by a transmitter to communicate with several receivers using Spatial-Division Multiple Access (SDMA). SDMA is a multiple access scheme which enables multiple streams transmitted to different receivers at the same time to share the same frequency spectrum. Within any given stream, there are data packets that contain both data and preamble. Designing efficient preambles are needed to handle the new technology.

**SUMMARY**

In one aspect of the disclosure, an apparatus for communications comprises a processing system configured to generate a plurality of spatial streams. Each of the spatial streams comprises a plurality of symbols. The processing system is further configured to distribute at least a portion of a training sequence across a first symbol in a first one of the spatial streams and a second symbol in a second one of the spatial streams.

In another aspect of the disclosure, a method for communications comprises generating a plurality of spatial streams wherein each of the spatial streams comprises a plurality of symbols. The method further comprises distributing at least a portion of a training sequence across a first symbol in a first one of the spatial streams and a second symbol in a second one of the spatial streams.

In yet another aspect of the disclosure, an apparatus for communications comprises means for generating a plurality of spatial streams, wherein each of the spatial streams comprises a plurality of symbols. The apparatus further comprises means for distributing at least a portion of a training sequence across a first symbol in a first one of the spatial streams and a second symbol in a second one of the spatial streams.

In a further aspect of the disclosure, a computer-program product for wireless communication comprises a machine-readable medium encoded with instructions executable to generate a plurality of spatial streams, wherein each of the spatial streams comprises a plurality of symbols. The machine-readable medium is further encoded with instructions executable to distribute at least a portion of a training sequence across a first symbol in a first one of the spatial streams and a second symbol in a second one of the spatial streams.

In yet a further aspect of the disclosure, an access point, comprises a processing system configured to generate a plurality of spatial streams, wherein each of the spatial streams comprises a plurality of symbols. The processing system is further configured to distribute at least a portion of a training sequence across a first symbol in a first one of the spatial streams and a second symbol in a second one of the spatial streams.

## BRIEF DESCRIPTION OF THE DRAWINGS

These and other sample aspects of the invention will be described in the detailed description that follows, and in the accompanying drawings, wherein:

FIG. 1 is a diagram of a wireless communications network;

FIG. 2 is a block diagram illustrating an example of a wireless node;

FIG. 3 is a diagram depicting an exemplary Mixed-Mode preamble with 3rd HT-SIG symbol;

FIG. 4 is a diagram depicting an exemplary Greenfield preamble with 3rd HT-SIG symbol;

FIG. 5 is a diagram depicting an exemplary preamble with an extra HT-LTF;

FIG. 6 is a diagram depicting an exemplary VHT-only-Greenfield preamble;

FIG. 7 is a diagram depicting an exemplary alternative Mixed-Mode preamble with extra HT-STF;

FIG. 8 is a diagram depicting exemplary shortened channel training for four spatial streams;

FIG. 9 is a diagram depicting exemplary channel training for eight spatial streams;

FIG. 10 is a diagram depicting exemplary alternative channel training for eight spatial streams;

FIG. 11 is a diagram depicting an exemplary VHT-only-Greenfield preamble with extended HT-LTF;

FIG. 12 is a diagram depicting exemplary channel training for sixteen spatial streams;

FIG. 13 is a diagram depicting an exemplary VHT Greenfield preamble with different STF and LTF;

FIG. 14 is a diagram depicting an exemplary VHT Greenfield frame format;

FIG. 15 is a diagram depicting an exemplary VHT Greenfield frame format for open loop MIMO;

FIG. 16 is a diagram depicting an exemplary VHT Mixed-Mode frame format;

FIG. 17 is a diagram depicting an exemplary VHT Mixed-Mode frame format for open loop MIMO;

FIG. 18 is a diagram depicting an exemplary uplink frame format;

FIG. 19 is a diagram depicting an exemplary alternative VHT Greenfield frame format;

FIG. 20 is a diagram depicting an exemplary alternative VHT Greenfield frame format for open loop MIMO;

FIG. 21 is a diagram depicting an exemplary alternative VHT Mixed-Mode frame format;

FIG. 22 is a diagram depicting an exemplary alternative VHT Mixed-Mode frame format for open loop MIMO; and

FIG. 23 is a diagram depicting an exemplary alternative uplink frame format.

In accordance with common practice, some of the drawings may be simplified for clarity. Thus, the drawings may not depict all of the components of a given apparatus (e.g., device) or method. Finally, like reference numerals may be used to denote like features throughout the specification and figures.

## DETAILED DESCRIPTION

Various aspects of the invention are described more fully hereinafter with reference to the accompanying drawings. This invention may, however, be embodied in many different forms and should not be construed as limited to any specific structure or function presented throughout this disclosure. Rather, these aspects are provided so that this disclosure will be thorough and complete, and will fully convey the scope of the invention to those skilled in the art. Based on the teachings herein, one skilled in the art should appreciate that the scope of the invention is intended to cover any aspect of the invention disclosed herein, whether implemented independently of or combined with any other aspect of the invention. For example, an apparatus may be implemented or a method may be practiced using any number of the aspects set forth herein. In addition, the scope of the invention is intended to cover such an apparatus or method which is practiced using other structure, functionality, or structure and functionality in addition to  or other than the various aspects of the invention set forth herein. It should be understood that any aspect of the invention disclosed herein may be embodied by one or more elements of a claim.

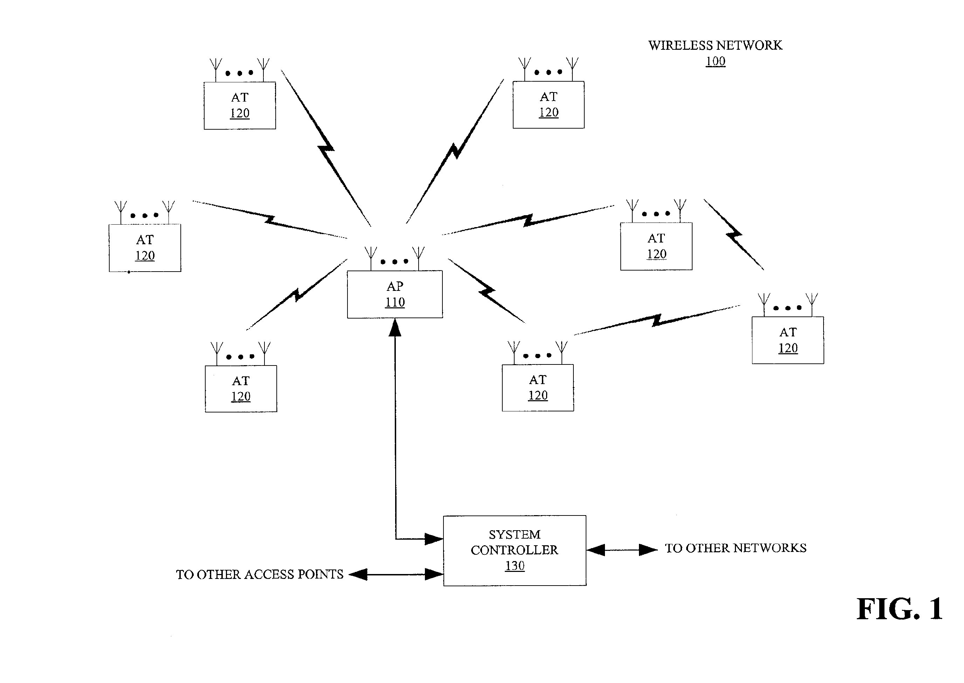

Several aspects of a wireless network will now be presented with reference to FIG. 1. The wireless network 100 is shown with several wireless nodes, generally designated as nodes 110 and 120. Each wireless node is capable of receiving and/or transmitting. In the detailed description that follows, the term "access point" is used to designate a transmitting node and the term "access terminal" is used to designate a receiving node for downlink communications, whereas the term "access point" is used to designate a receiving node and the term "access terminal" is used to designate a transmitting node for uplink communications. However, those skilled in the art will readily understand that other terminology or nomenclature may be used for an access point and/or access terminal. By way of example, an access point may be referred to as a base station, a base transceiver station, a station, a terminal, a node, an access terminal acting as an access point, or some other suitable terminology. An access terminal may be referred to as a user terminal, a mobile station, a subscriber station, a station, a wireless device, a terminal, a node, or some other suitable terminology. The various concepts described throughout this disclosure are intended to apply to all suitable wireless nodes regardless of their specific nomenclature.

The wireless network 100 may support any number of access points distributed throughout a geographic region to provide coverage for access terminals 120. A system controller 130 may be used to provide coordination and control of the access points, as well as access to other networks (e.g., Internet) for the access terminals 120. For simplicity, one access point 110 is shown. An access point is generally a fixed terminal that provides backhaul services to access terminals in the geographic region of coverage, however, the access point may be mobile in some applications. An access terminal, which may be fixed or mobile, utilizes the backhaul services of an access point or engages in peer-to-peer communications with other access terminals. Examples of access terminals include a telephone (e.g., cellular telephone), a laptop computer, a desktop computer, a Personal Digital Assistant (PDA), a digital audio player (e.g., MP3 player), a camera, a game console, or any other suitable wireless node.

The wireless network 100 may support MIMO technology. Using MIMO technology, an access point 110 may communicate with multiple access terminals 120 simultaneously using SDMA. As explained in the background section of this disclosure, SDMA is a multiple access scheme which enables multiple streams transmitted to different receivers at the same time to share the same frequency channel and, as a result, provide higher user capacity. This is achieved by spatially precoding each data stream and then transmitting each spatially precoded stream through a different transmit antenna on the downlink. The spatially precoded data streams arrive at the access terminals with different spatial signatures, which enables each access terminal 120 to recover the data stream destined for that access terminal 120. On the uplink, each access terminal 120 transmits a spatially precoded data stream, which enables the access point 110 to identify the source of each spatially precoded data stream.

One or more access terminals 120 may be equipped with multiple antennas to enable certain functionality. With this configuration, multiple antennas at the access point 110 may be used to communicate with a multiple antenna access point to improve data throughput without additional bandwidth or transmit power. This may be achieved by splitting a high data rate signal at the transmitter into multiple lower rate data streams with different spatial signatures, thus enabling the receiver to separate these streams into multiple channels and properly combine the streams to recover the high rate data signal.

While portions of the following disclosure will describe access terminals that also support MIMO technology, the access point 110 may also be configured to support access terminals that do not support MIMO technology. This approach may allow older versions of access terminals (i.e., "legacy" terminals) to remain deployed in a wireless network, extending their useful lifetime, while allowing newer MIMO access terminals to be introduced as appropriate.

In the detailed description that follows, various aspects of the invention will be described with reference to a MIMO system supporting any suitable wireless technology, such as Orthogonal Frequency Division Multiplexing (OFDM). OFDM is a spread-spectrum technique that distributes data over a number of subcarriers spaced apart at precise frequencies. The spacing provides "orthogonality" that enables a receiver to recover the data from the subcarriers. An OFDM system may implement IEEE 802.11, or some other air interface standard.

Other suitable wireless technologies include, by way of example, Code Division Multiple Access (CDMA), Time Division Multiple Access (TDMA), or any other suitable wireless technology, or any combination of suitable wireless technologies. A CDMA system may implement with IS-2000, IS-95, IS-856, Wideband-CDMA (WCDMA), or some other suitable air interface standard. A TDMA system may implement Global System for Mobile Communications (GSM) or some other suitable air interface standard. As those skilled in the art will readily appreciate, the various aspects of this invention are not limited to any particular wireless technology and/or air interface standard.

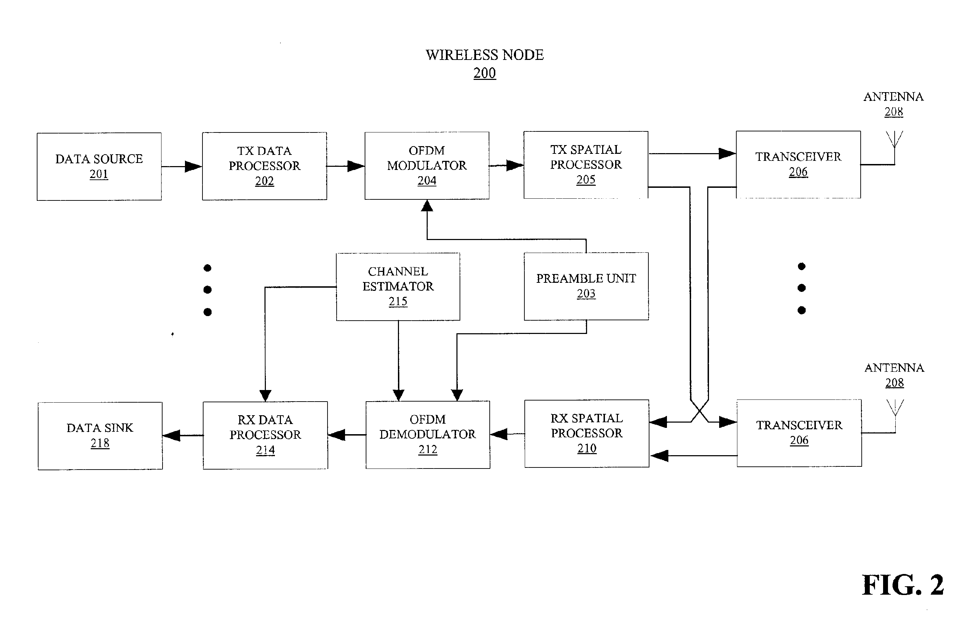

FIG. 2 is a conceptual block diagram illustrating an example of a wireless node. In a transmit mode, a TX data processor 202 may be used to receive data from a data source 201 and encode (e.g., Turbo code) the data to facilitate forward error correction (FEC) at the receiving node. The encoding process results in a sequence of code symbols that may be blocked together and mapped to a signal constellation by the TX data processor 202 to produce a sequence of modulation symbols.

In wireless nodes implementing OFDM, the modulation symbols from the TX data processor 202 may be provided to an OFDM modulator 204. The OFDM modulator 204 splits the modulation symbols into a number of parallel streams and then maps each stream to a subcarrier using some modulation constellation. An Inverse Fast Fourier Transform (IFFT) is then performed on each set of subcarriers to produce time domain OFDM symbols, with each OFDM symbol having a set of subcarriers. The OFDM symbols are distributed in the payloads of multiple data packets.

In at least one configuration of a wireless node 200, a preamble is carried along with the payload in each data packet. The preamble may be comprised of several symbols which are provided to the OFDM modulator 204 by a preamble unit 203. The OFDM modulator 204 splits the preamble symbols into a number of parallel streams, and then maps each stream to a subcarrier using some modulation constellation. An (IFFT) is then performed on each set of subcarriers to produce one or more time domain OFDM symbols which constitutes the preamble. The preamble is then appended to payload carried by each data packet before providing the data packets to a TX spatial processor 205.

A TX spatial processor 205 performs spatial processing on the data packets. This may be accomplished by spatially precoding the data packets into a number of spatially precoded streams and then providing each spatially precoded stream to a different antenna 208 via a transceiver 206. Each transceiver 206 modulates an RF carrier with a respective precoded stream for transmission over the wireless channel.

In a receive mode, each transceiver 206 receives a signal through its respective antenna 208. Each transceiver 206 may be used to recover the information modulated onto an RF carrier and provide the information to a RX spatial processor 210.

The RX spatial processor 210 performs spatial processing on the information to recover data packets carried any spatial streams destined for the wireless node 200. The spatial processing may be performed in accordance with Channel Correlation Matrix Inversion (CCMI), Minimum Mean Square Error (MMSE), Soft Interference Cancellation (SIC), or some other suitable technique.

The preamble unit 203 will use the preamble in each data packet to provide synchronization information to the OFDM demodulator 212. The OFDM demodulator 212 recovers the data carried on each subcarrier in the OFDM symbols in the payload of the data packet and multiplexes the data into a stream of modulation symbols. The OFDM demodulator 212 converts the stream from time-domain to the frequency domain using a Fast Fourier Transfer (FFT). The frequency domain signal comprises a separate stream for each subcarrrier.

The channel estimator 215 receives the streams from the OFDM demodulator 212 and estimates the channel response. As part of the preamble there may be a set of pilot signals. Each pilot signal will be generally shifted in phase due to the transmission through the wireless channel. The MMSE estimates of the phase shifted pilot signals are computed and the MMSE estimates are used to estimate phase errors and consequently the channel response. The channel response is provided to the RX data processor 214.

The RX data processor 214 is used to translate the modulation symbols back to the correct point in the signal constellation. Because of noise and other disturbances in the wireless channel, the modulation symbols may not correspond to an exact location of a point in the original signal constellation. Using the channel response, the RX data processor 214 detects which modulation symbol was most likely transmitted by finding the smallest distance between the received point and the location of a valid symbol in the signal constellation. These soft decisions may be used, in the case of Turbo codes, for example, to compute a Log-Likelihood Ratio (LLR) of the code symbols associated with the given modulation symbols. The RX data processor 214 then uses the sequence of code symbol LLRs and the phase error estimates in order to decode the data that was originally transmitted before providing the data to a data sink 218.

A preamble within each data packet includes a training sequence. A training sequence contains a number of modulated symbols. A training sequence may comprise a Short Training Field (STF) and/or a Long Training Field (LTF). The preamble unit 203 together with the OFDM modulator 204 creates preambles according to the following mechanisms. The preambles are generated by distributing at least one symbol containing information indicating a length of data and a modulation scheme. Such information may be different for at least two of the data packets. The preamble unit 203 is further configured to distribute at least a portion of a training sequence or the STF or LTF, across a first symbol in a first one of the data packets and across a second symbol in a second one of the data packets. On the receive side, the preamble unit 203 is used to aid the OFDM demodulator 212 in decoding the data packets. The following is description of additional details about the operational steps taken by the preamble unit 203 on the transmit side.

The preambles may also be generated by a distribution of a further portion of the training sequence into a third symbol in a third one of the data packets, or into another symbol in the first one of the data packets that temporally follows the first symbol, or into another symbol on a third one of the data packets that temporally follows the first symbol. Also, the portion of the training sequence in the first symbol may be distributed into a fourth symbol in the first one of the spatial streams that temporally follows the third symbol.

Furthermore, when each of the first and second symbols has multiple subcarriers, then the training sequences are distributed across different subcarriers in the first and second symbols. The portion of the training sequence in the first symbol may be cyclically delayed.

When the first one of the symbols includes a number of subcarriers carrying a signal, the signal carried by the subcarriers may be multiplied by the portion of the training sequence in the first symbol. Or when the first symbol includes multiple in-band and out-of-band subcarriers, then the portion of the training sequence in the first symbol is distributed across the in-band subcarriers, and the out-of-bound subcarriers are attenuated.

In generating the preambles, at least one of the symbols, may be modulated with a spoof modulation scheme. Furthermore, one of the symbols in the first one of the spatial streams may be modulated with a first modulation scheme, and another one of the symbols in the first one of the spatial streams may be modulated with a second modulation scheme that is different from the first modulation scheme.

The following figures illustrate a number of exemplary preambles that may be constructed. The new exemplary preambles start with existing 11n (802.11 version n) preambles and include High Throughput-Signals (HT-SIG) using spoofed rate and length field. Extra HT-SIG fields are used for signaling new modes and modified High Throughput-Long Training Fields (HT-LTF) are used for channel estimation of more tones and/or more spatial streams.

In the context of having an extra HT-SIG for Greenfield (GF), a 3rd HT-SIG symbol is inserted after existing HT-SIG symbols. A Binary Phase Shift Keying (BPSK) spoof rate is used with one spatial stream in 11n HT-SIG. Existing rotated-BPSK mechanism is used to detect the presence of the 3rd HT-SIG. A HT-LTF may use more subcarriers than 11n in a 40 MHz 11n subchannel. To avoid legacy problems, the first HT-LTF uses 11n subcarriers. This would lead to having 114 subcarriers in each 40 MHz subchannel.

In the context of extra HT-SIG, for Mixed Mode (MM), a 3rd HT-SIG is inserted after first HT-LTF. The 3rd HT-SIG may not be inserted after existing HT-SIG because a gain step is performed at that point. Furthermore, a BPSK spoof rate is used with 1 spatial stream in 11n HT-SIG, and existing rotated-BPSK mechanism is used to detect the presence of the 3rd HT-SIG.

In the context of having an extra HT-SIG options, one extra symbol using rotated BPSK may be employed if 24 extra signaling bits are enough. Two extra symbols using rotated BPSK can result in more overhead. One extra symbol using Quadrature Phase Shift Keying (QPSK) may result in Signal Noise Ratio (SNR) penalty in detecting QPSK versus rotated BPSK. The pilots of the extra HT-SIG3 can be inverted.

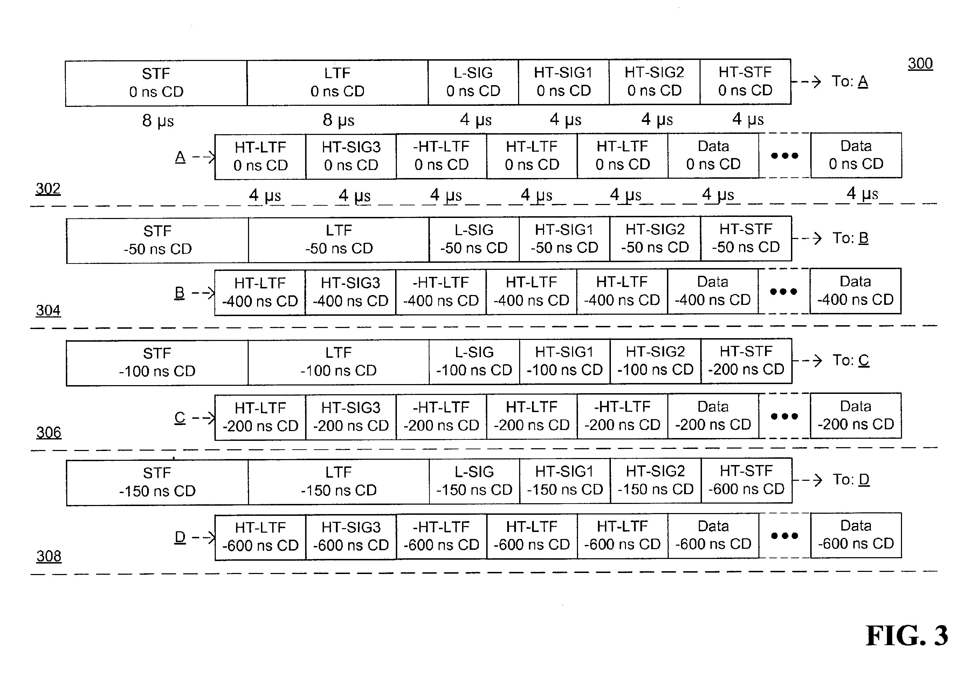

FIG. 3 is a diagram depicting a set of example Mixed-Mode preambles 300 with a 3rd HT-SIG symbol, which includes Mixed-Mode preambles 302-308. The 3rd HT-SIG has a different sign and cyclic delay than HT-SIG1 and HT-SIG2 to match the sign and cyclic delay of HT-LTF. All symbols up to the High Throughput-Short Training Field (HT-STF) are 11n 40 MHz copies in two 40 MHz channels, possibly with a 90 degrees phase rotation. Symbols after HT-STF may use tone filling to have more subcarriers than two 11n 40 MHz channels. The set of example Mixed-Mode preambles 300 shown in FIG. 3 is for four antennas, this can be extended to eight by using different cyclic delays on the other four antennas.

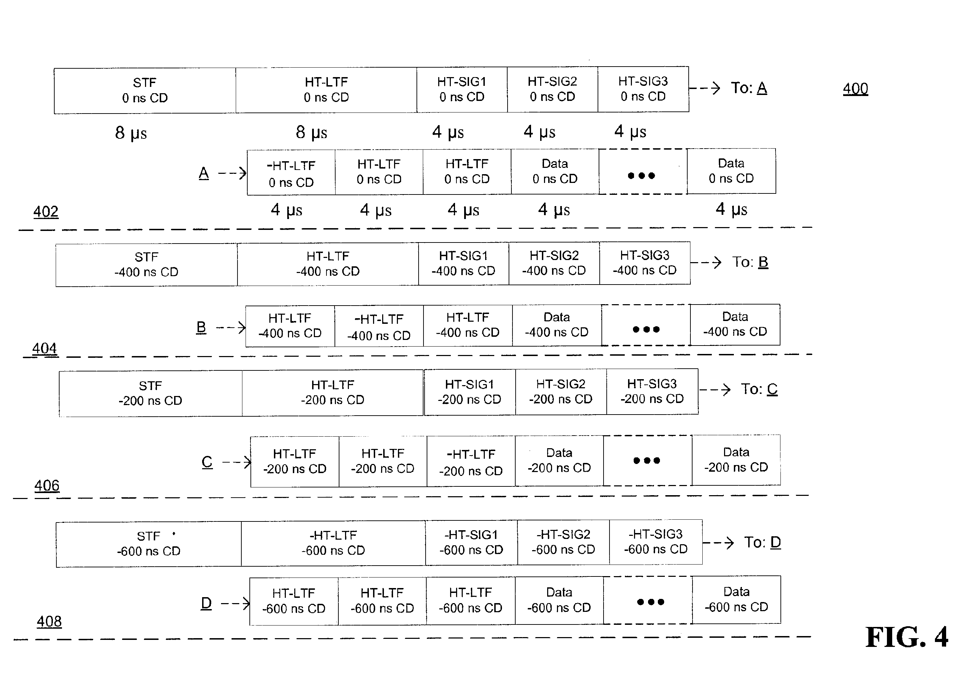

FIG. 4 is a diagram depicting a set of example Greenfield preambles 400 with 3rd HT-SIG symbol, which includes Greenfield preambles 402-408. Legacy 11n devices have to defer based on HT-SIG1&2 that contains a spoof length and spoof BPSK rate. BPSK check is rotated on HT-SIG3 to detect the new mode.

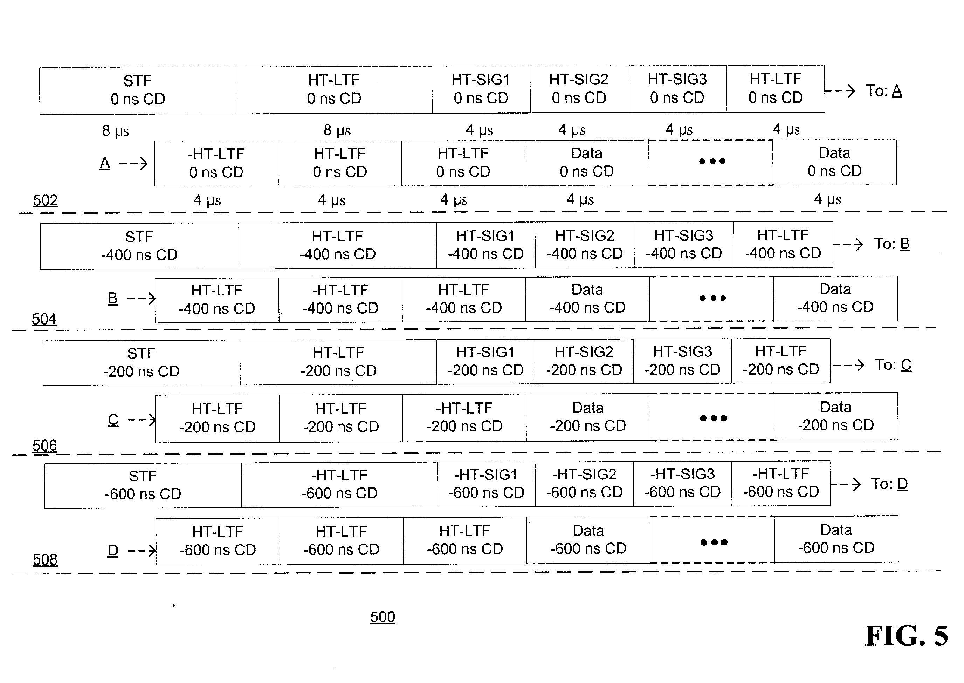

FIG. 5 is a diagram depicting a set of example preambles 500 with an extra HT-LTF, which includes preambles 502-508. The preambles contained in the set of preambles 500 of FIG. 5 are similar to the set of example Greenfield preambles 400, but with an extra HT-LTF. As such, there is no need to do tone filling in the first HT-LTF.

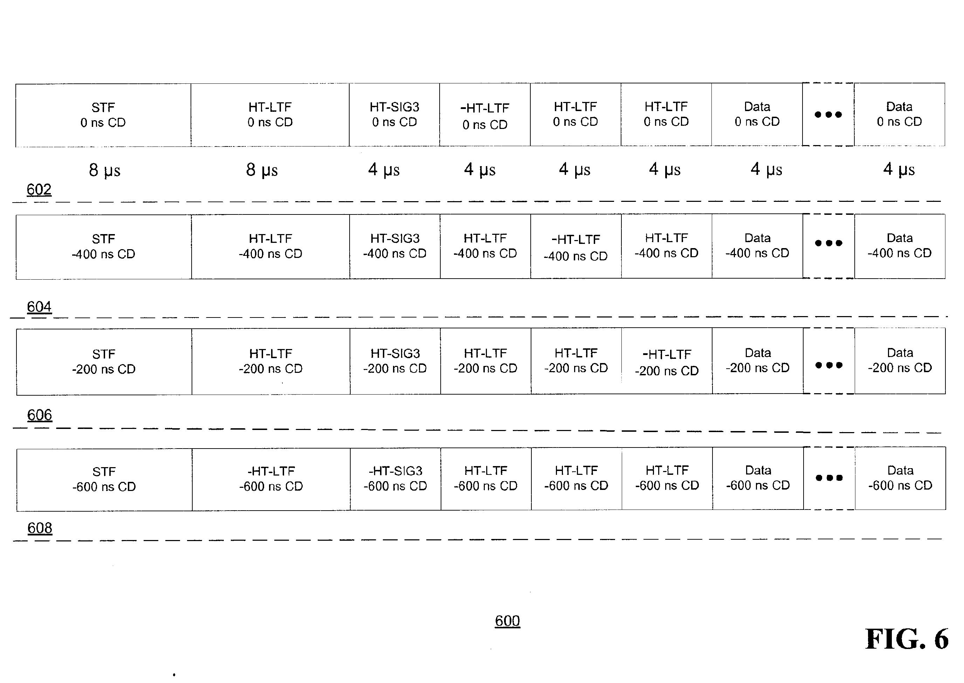

FIG. 6 is a diagram depicting a set of example VHT-only-Greenfield preambles 600, which includes VHT-only-Greenfield preambles 602-608. The set of example VHT-only-Greenfield preambles 600 shown in FIG. 6 is used for VHT networks or within a transmit operation when the medium is reserved for some time. Detection of this preamble is done by a QPSK detect on HT-SIG3 or by using inverted pilots in HT-SIG3. This preamble is for 4 spatial streams, it can be extended to 8 or more by using different cyclic delays and by using different HT-LTFs.

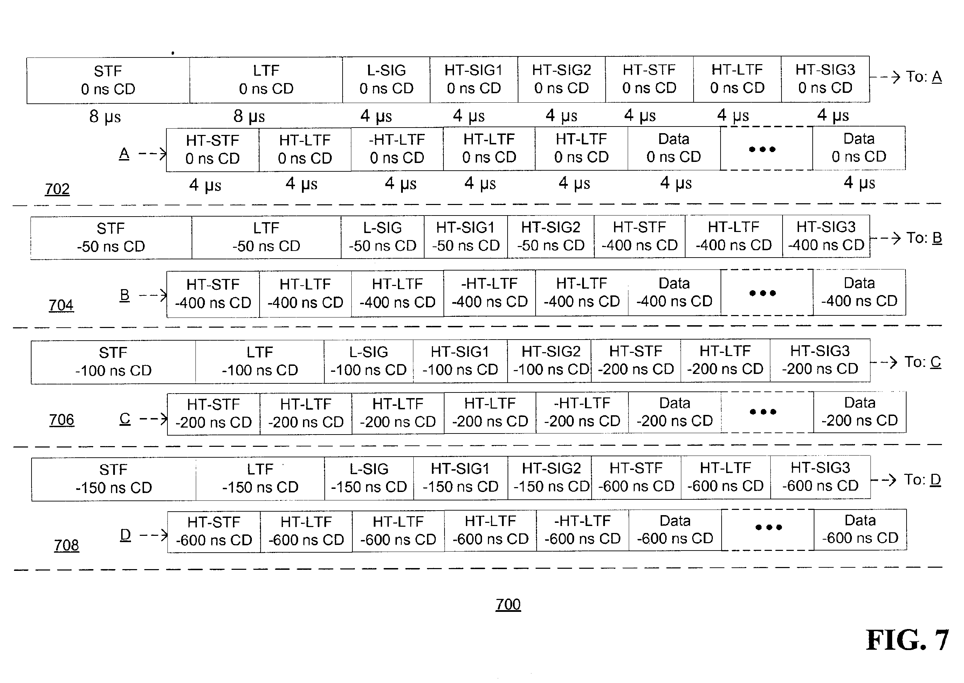

FIG. 7 is a diagram depicting a set of example alternative Mixed-Mode preambles 700 with extra HT-STF, which includes alternative Mixed-Mode preambles 702-708. The set of example alternative Mixed-Mode preambles 700 shown in FIG. 7 may be used in combination with beamforming, where beamforming can start after HT-SIG3 such that there are no hidden node problems up to HT-SIG3. There may be an additional 8 microseconds in the preamble - one extra HT-STF and one extra HT-LTF. This alternative preamble may not be necessary if all devices are required to defer for the length indicated by HT-SIG1&2.

For more than 4 spatial streams, in the 11n extension, more HT-LTF symbols, (e.g., 8 symbols with a length 8 Walsh codes for 8 spatial streams) may be used. Several shorter alternatives exist for the HT-LTF part of the preamble. For example, one may use tone interpolation to distinguish between spatial streams, and another may use large cyclic delay (CDD) or cyclic delay diversity (CDD) values to distinguish between spatial streams. Both methods may require channel interpolation at the receiver.

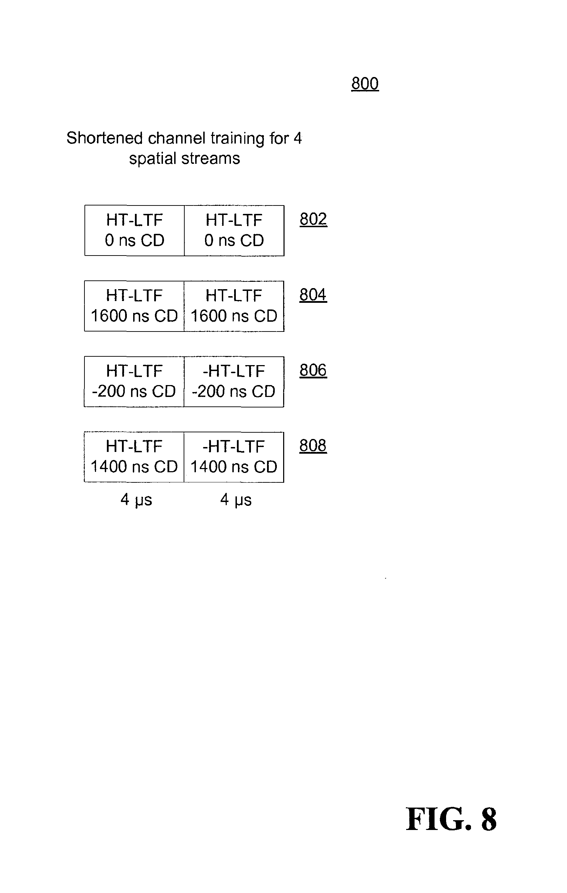

FIG. 8 is a diagram depicting a set of example shortened channel training sequences 800 for four spatial streams, which includes shortened channel training sequences 802-808. A 1600 ns CDD in combination with a Walsh code for separating 2 pairs of spatial streams, may be used. Channel truncation and interpolation may be needed in the receiver to do channel training.

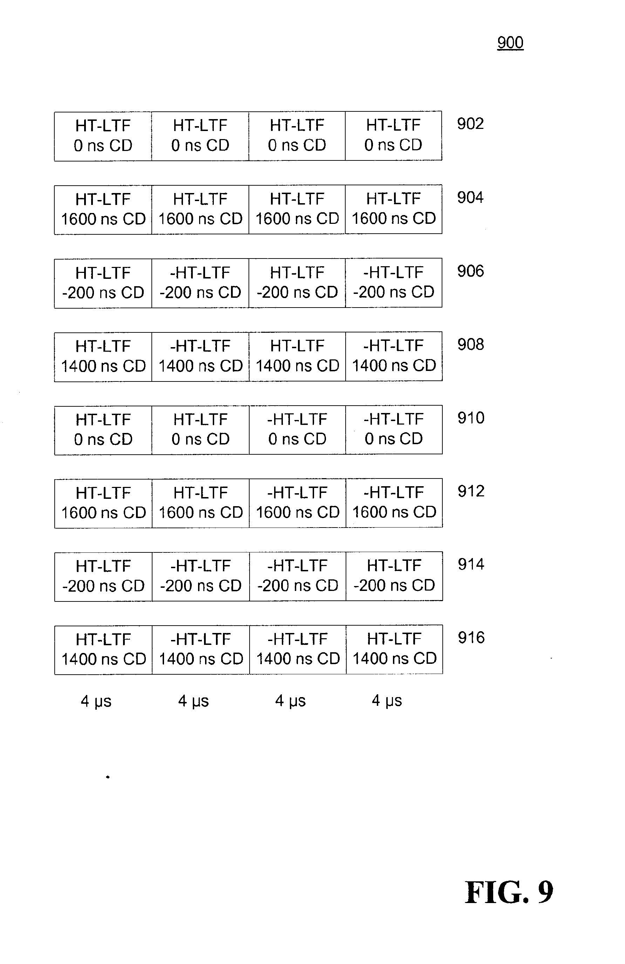

FIG. 9 is a diagram depicting a set of example channel training sequences 900 for eight spatial streams, which includes shortened channel training sequences 902-916. Similar to the example shown for Fig. 8, a 1600 ns CDD in combination with a Walsh code for separating 2 pairs of spatial streams may also be used in this case. Channel truncation and interpolation may also be needed in a receiver to perform channel training.

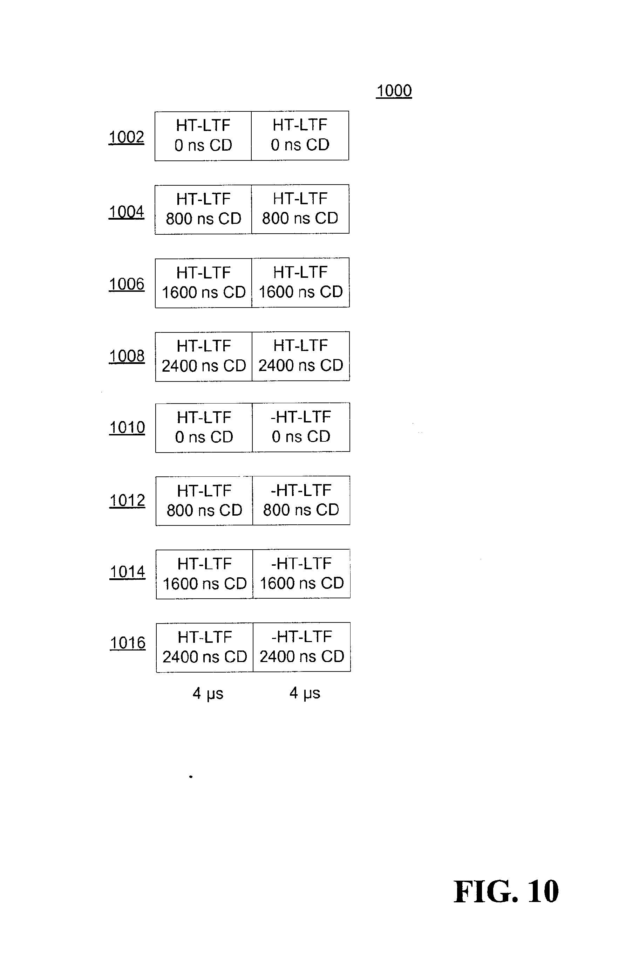

FIG. 10 is a diagram depicting a set of example alternative channel training sequences 1000 for eight spatial streams, which includes shortened channel training sequences 1002-1016. Referring to FIG. 10, impulse responses for each spatial stream may have to be limited to 800 ns in order to separate 4 spatial streams after the adding and subtracting of both columns.

It may be desirable to add some constant CDD (e.g., 200 ns) to the bottom 4 rows in the preambles shown in FIGS. 9 and 10 in order to avoid any undesired beamforming. Having an 8 spatial stream Greenfield preamble with HT-SIG3 could be 36 microseconds, which is the same length as the current 4 spatial stream 802.11n Greenfield preamble.

Current 11n HT-LTF may be sensitive to phase noise and frequency errors. One way to estimate common phase errors during the channel training interval would be to use a subset of pilot tones that do not change relative phase per spatial stream throughout the entire channel training interval.

Alternatively, one may increase the guard time of the channel training symbols. The 11n system uses a guard time of 800 ns which is required to deal with delay spread. By increasing this guard time to 1600 ns or even more, a significant amount of samples in every HT-LTF can be used to estimate a frequency error per symbol. A 2800 ns guard interval would give a HT- LTF symbol duration of 6 microseconds with 2 microseconds available for frequency estimation. The frequency estimation can be done by comparing the phase of the samples in the interval 800 ns to 2800 ns to the samples in the interval 4000 ns to 6000 ns.

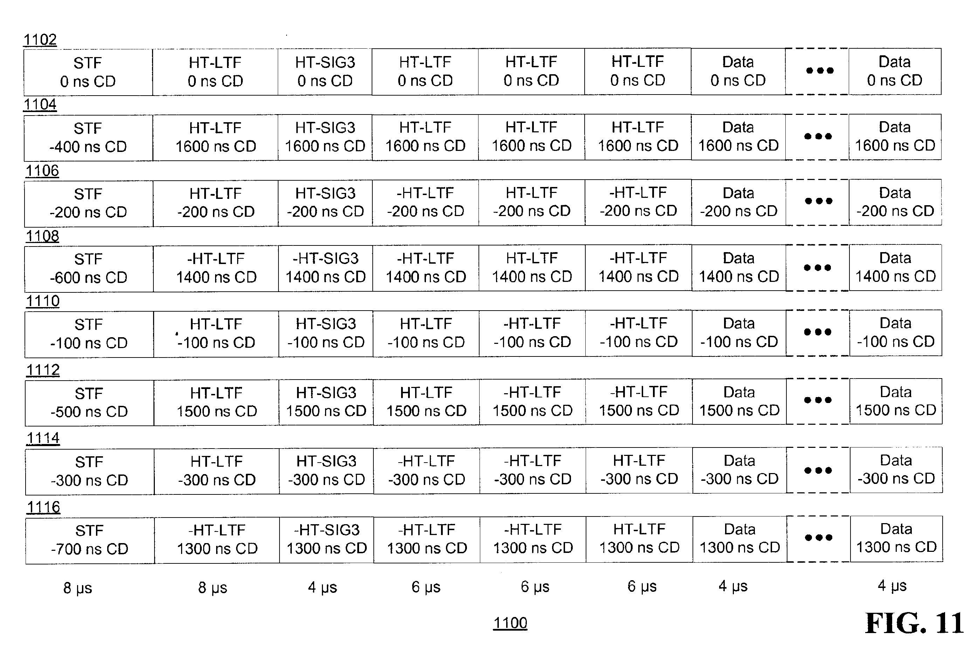

FIG. 11 is a diagram depicting a set of example VHT-only-Greenfield preambles 1100 with extended HT-LTF, which includes VHT-only-Greenfield preambles 1102-1116. More specifically, FIG. 11 shows a 38 microseconds preamble for 8 spatial streams in a 80 MHz channel (11n Greenfield preamble is 36 microseconds for 4 spatial streams). The HT-LTF could be extended to 8 microseconds, making the preamble 44 microseconds.

Existing *Nss*-spatial stream channel training HN, such as the described 8-spatial stream training, can be used to make a new training pattern to double the number of spatial streams by the following equation.

$$H_{2N} = \begin{bmatrix} H_N & H_N \\ H_N & -H_N \end{bmatrix}$$

With this extension, a 16-spatial stream preamble can be made that is as long as the 8-spatial stream preambles but with the double number of HT-LTF symbols.

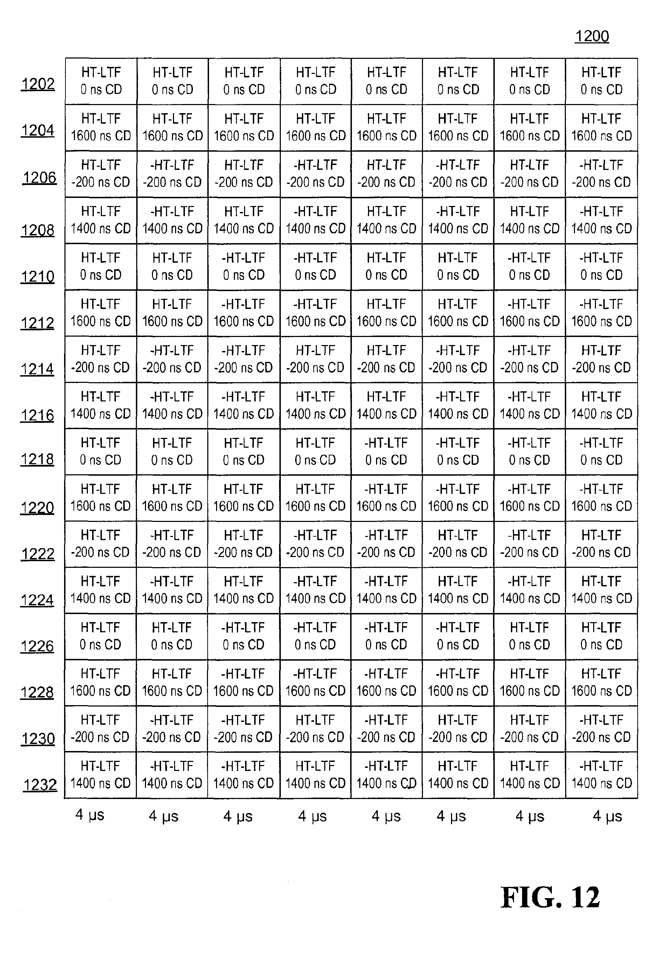

FIG. 12 is a diagram depicting a set of example channel training sequence 1200 for sixteen spatial streams, which includes channel training sequences 1202-1232.

Regarding VHT Signal Field for SDMA downlink, a single spatial stream followed by a SDMA downlink beamforming matrix may be used. For example, for a 2- space- time- stream client, one may first generate two VHT- SIG copies with a CDD of - 400 ns. Then a beamforming matrix can be applied to obtain, for instance, 8 TX (transmit) signals (in case of an AP with 8 antennas) .

Regarding VHT-SIG for uplink, clients may transmit a preamble with a number of spatial streams being equal to the max number of spatial streams that AP can handle. Alternative, the number of spatial streams may be greater than the total number of all uplink streams. AP can do MIMO detection on different VHT-SIGs after the HT-LTF channel estimation.

For SDMA uplink, the preambles described above can be used, however each user would need to transmit on a different part of the available spatial streams. For instance, if there are 3 users and 16 spatial streams, user 1 transmits using spatial streams 1-8, user two transmits using streams 9-14, and user 3 transmits using streams 15-16.

There may be an issue with the VHT-SIG that may need to be different per user unless the AP already knows in advance what modulation and packet length each user has). One possibility would be to have a VHT-SIG after last VHT-LTF. Regarding VHT-SIG in SDMA uplink, it is assumed that AP knows in advance how many streams each client transmits. This can be fulfilled, for example, by some scheduled mechanism. After the last VHT-LTF, each client may transmit a VHT-SIG copy with a different CDD on each spatial stream.

Previous figures showed short training fields (STF) consisting of 802.11n STFs with different CDD values per transmitter. However, alternative STF signals are possible with better Automotive Gain Control (AGC) gain setting. Also there are alternative LTF symbols.

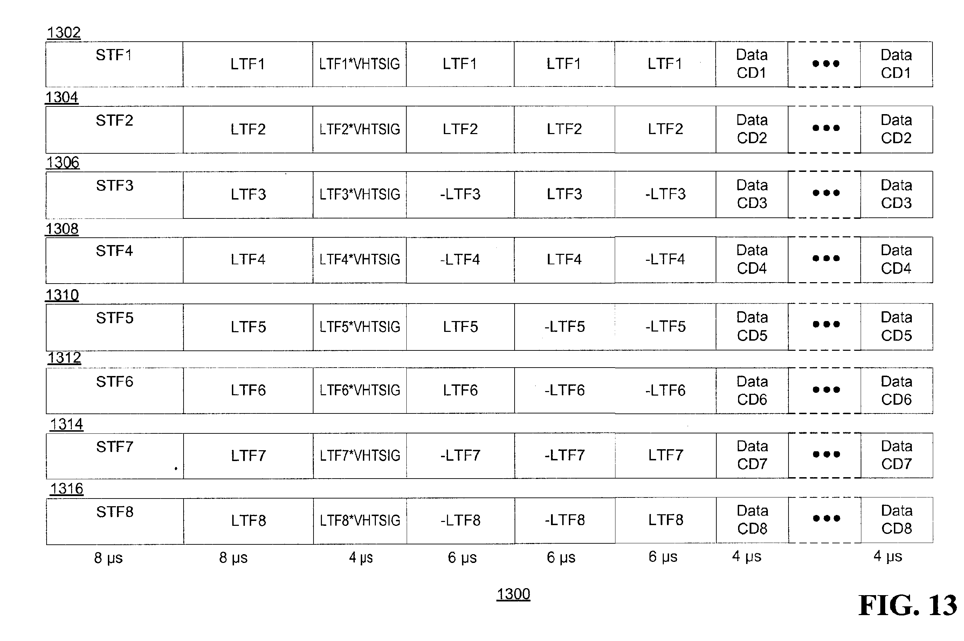

FIG. 13 is a diagram depicting a set of example VHT Greenfield preambles 1300 with different STF and LTF, which includes VHT Greenfield preambles 1302-1316. Referring to FIG. 13, each preamble in the set of VHT Greenfield preambles 1300 can be extended to 16 spatial streams by adding 8 different STF&LTF and by using a 8x8 Walsh-Hadamard encoding on groups of two LTF symbols. The scheme shown in FIG. 13 uses a 4x4 Walsh-Hadamard encoding on groups of two LTF symbols.

The following are the 1600ns cyclic delayed pairs: {LTF1, LTF2), {LTF3, LTF4}, {LTF5, LTF6}, {LTF7, LTF8}, such that LTF1 = LTF2 multiplied by a  {1, -1, 1, -1, ...} pattern in the frequency domain. The VHT- SIG subcarriers for Transmitter m are multiplied by their corresponding LTF *m* subcarrier values. This makes it possible to decode VHT-SIG before receiving all LTF symbols, similar to the decoding of HT- SIG in an 11n packet. The data symbols may use a cyclic delay value CD*m*, e.g., *m*\*200 ns to prevent any undesired beamforming effects.

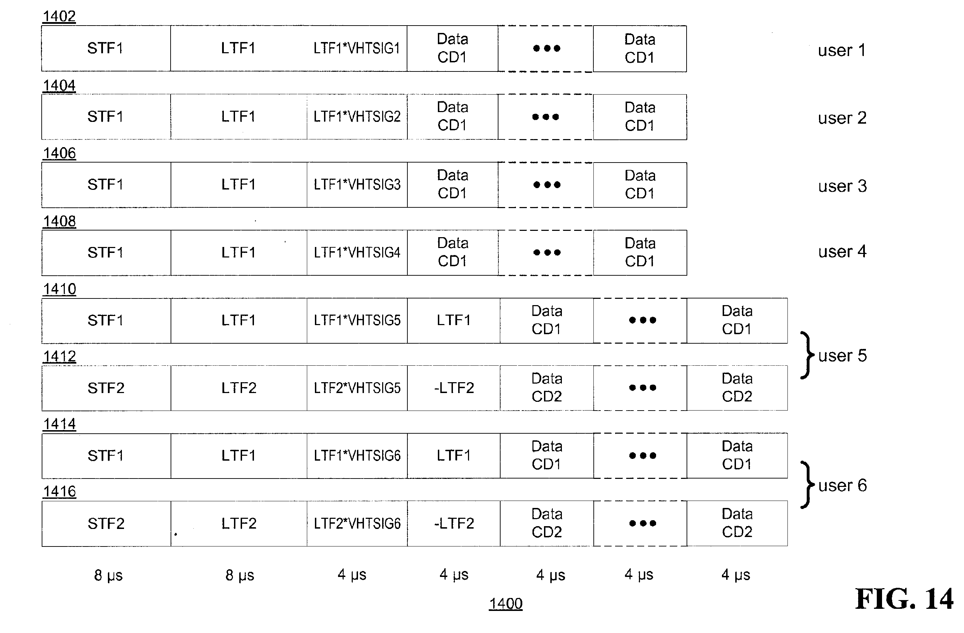

FIG. 14 is a diagram depicting a set of example VHT Greenfield frame formats 1400, which includes VHT Greenfield frame formats 1402-1416. Referring to FIG. 14, each user can have 1 to 8 spatial streams, resulting in different preamble lengths per user.

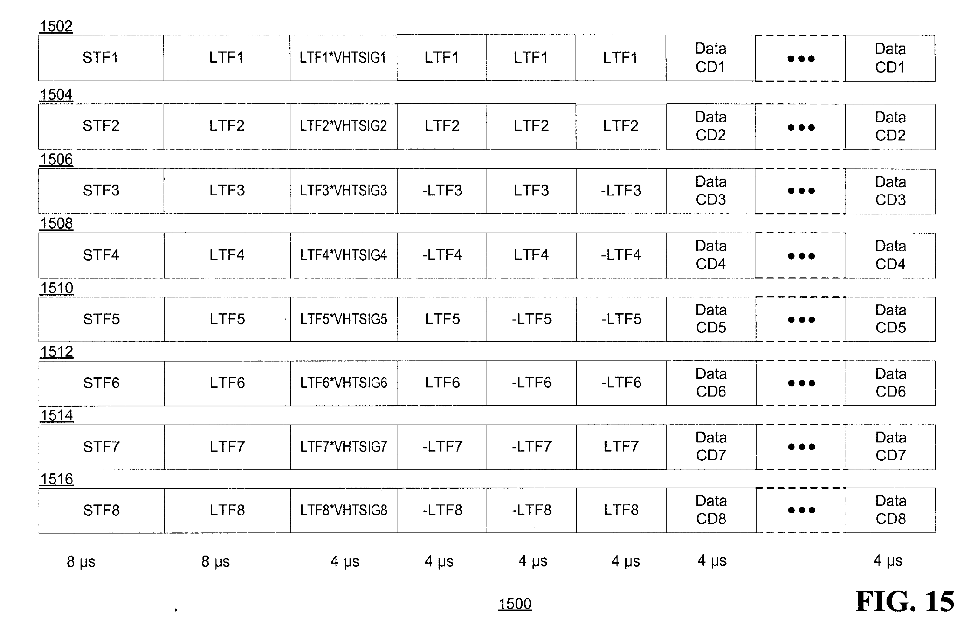

FIG. 15 is a diagram depicting a set of example VHT Greenfield frame formats 1500 for open loop MIMO. The set of example VHT Greenfield frame formats 1500 may be used in VHT-only networks or in a transmit operation preceded by an 802.11n NAV (Net Allocation Vector) setting. Preamble length including VHT-SIG is 32 microseconds for 8 spatial streams. The format can be extended to 16 spatial streams by adding 4 more LTFs. All parts of the frame are identically precoded in case of SDMA. Content of VHT-SIG is identical on spatial streams intended for the same user. VHT-SIG subcarriers are multiplied by LTF frequency domain values, which make it possible for each user to perform a Single Input or Multiple Output (SIMO) decoding of VHT-SIG using the first received LTF for channel estimation. Same frame formats may be used for open-loop MIMO. All VHT-SIG contents are identical in this case as there is only one receiving user. A VHT-GF may be detected by QPSK detection on VHT-SIG or by detecting inverted pilots in VHT-SIG.

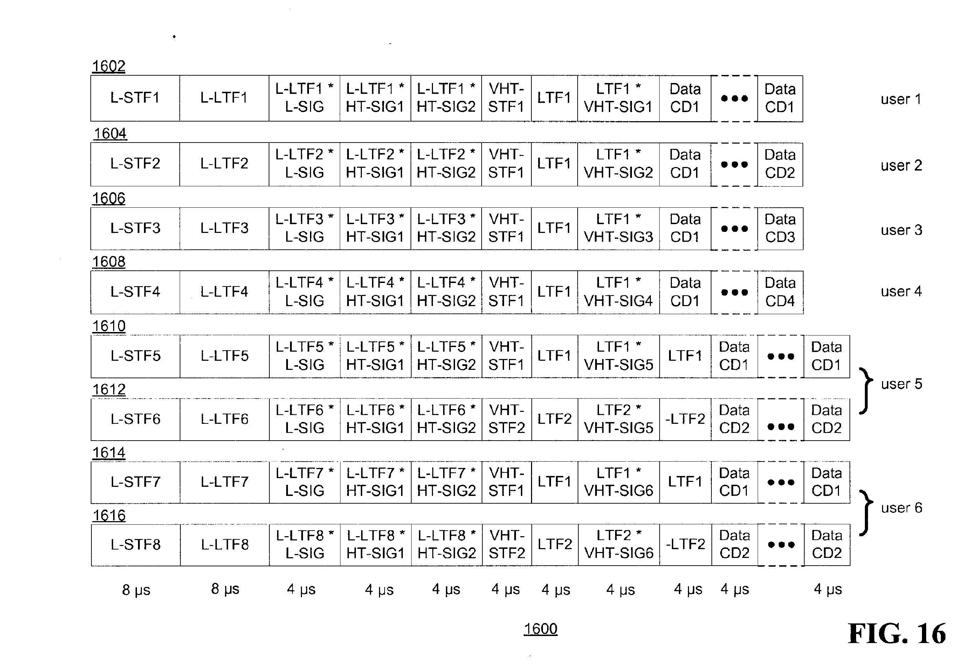

FIG. 16 is a diagram depicting a set of example Very High Throughput-Mixed- Mode (VHT -MM) frame formats 1600, which includes VHT-MM frame formats 1602-1616.

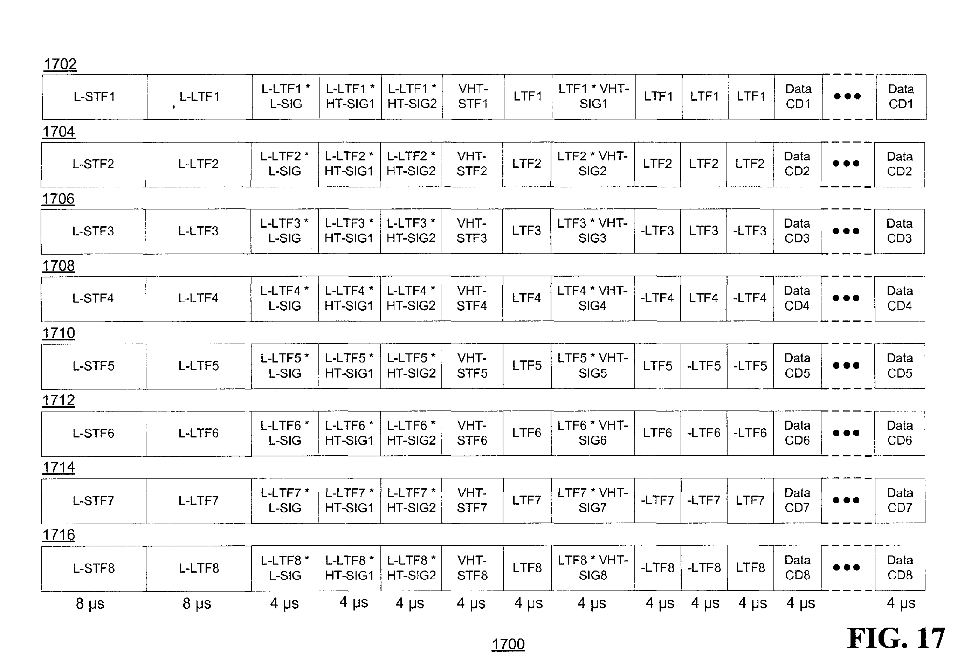

FIG. 17 is a diagram depicting a set of example VHT-MM frame formats 1700 for open loop MIMO, which includes VHT-MM frame formats 1702-1716.

Preamble length including VHT-SIG is 52 microseconds for 8 spatial streams. The format can be extended to 16 spatial streams by adding 4 more LTFs. The SDMA beamforming starts after HT-SIG2. Contents of VHT-SIG are identical on spatial streams intended for the same user. VHT-SIG subcarriers are multiplied by LTF frequency domain values, which makes it possible for each user to do a SIMO decoding of VHT-SIG using the first received LTF for channel estimation. The same frame format is used for open-loop MIMO. All VHT-SIG contents are identical in this case as there is only one receiving user.

VHT- MM can be detected by rotated- BPSK check on VHT- SIG, or by QPSK detection on VHT- SIG (if VHT-SIG QPSK is used to get more bits in one symbol) or by detecting inverted pilots in VHT- SIG. One may use BPSK 11n-spoof rate, such that the receiver will distinguish between the BPSK data symbol and the VHT- SIG when detecting VHT- MM. HT- SIG content is fully 11n compliant, without having to use reserved bits. VHT- SIG cannot be directly after the HT- SIG because of the AGC gain setting that is done immediately after HT- SIG on (V) HT- STF. Cyclic delay values are multiples of- 200 ns (the same values as used in LTF when cyclic delayed LTF symbol is used) .

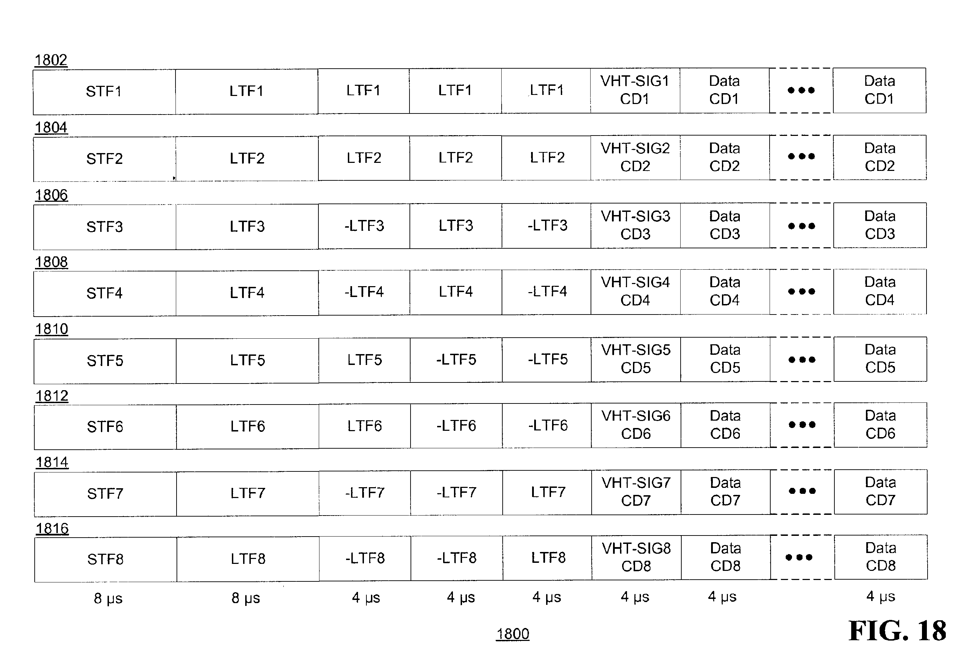

FIG. 18 is a diagram depicting a set of example uplink frame formats 1800, which includes uplink frame formats 1802-1816. Each uplink user uses a different subset of the available spatial streams ranging from 1-8 or 1-16. There is no mixed-mode preamble as it is assumed that there will always be an AP packet indicating the start of the uplink SDMA transmit operation (TXOP), which can include 11n NAV setting. VHT-SIG comes after all LTF symbols because the AP needs to do a MIMO detection on different VHT-SIGs per user. If a user transmits more than one spatial stream, its VHT-SIG content will be the same on all streams it transmits.

The AP has to know in advance how many spatial stream each user has. So, this information does not need to be in VHT-SIG. Uplink frame format may not be used for open-loop MIMO because one may not know in advance how many spatial streams there are. Therefore, a VHT SIG would be desirable to have before all the channel trainings.

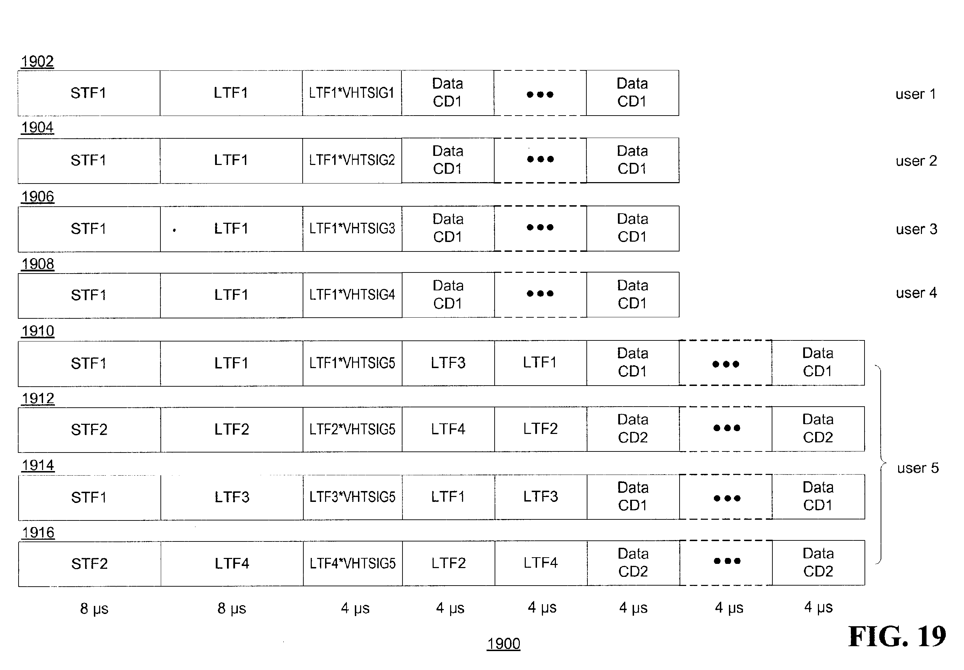

FIG. 19 is a diagram depicting a set of example alternative VHT Greenfield frame formats 1900, which includes alternative VHT Greenfield frame formats 1902-1916. Each user can have 1 to 8 spatial streams, resulting in different preamble lengths per user.

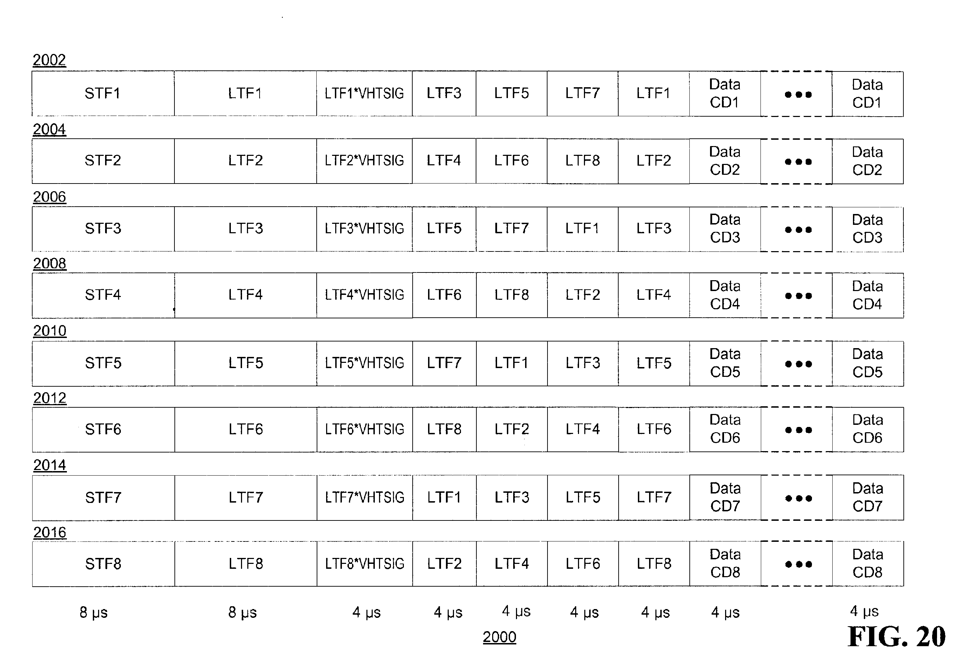

FIG. 20 is a diagram depicting a set of example alternative VHT Greenfield frame formats 2000 for open loop MIMO, which include alternative VHT Greenfield frame formats 2002-2016. The notation "LTF1*VHT-SIG" means an element-wise multiplication per subcarrier. Each VHT-SIG subcarrier is multiplied by the corresponding LTF subcarrier value. The LTF subcarrier value may include a phase rotation caused by a cyclic delay. The LTF symbols are tone interleaved. LTF has non-zero elements only at subcarriers. The LTF symbols may use one or more out-of-band tones to facilitate simpler and more accurate tone interpolation. Out-of-band tones are tones that are not used in data symbols. LTF out-of-band tones may be attenuated by a prescribed amount so that they would have less impact on the transmitted spectral mask.

The VHT-LTF subcarrier values are defined as:

$$\text{VHT-LTFi}(i+kN_{ss}) = N_{ss}^{1/2} \, L(i+kN_{ss}),$$

$$k=0, 1,..., \text{floor}(N_{sc}/N_{ss}), \; i+kN_{ss}<N_{sc} \qquad \text{VHT-LTFi}(j) = 0, \; j \neq i+kN_{ss}$$

where $N_{sc}$ is the total number of subcarriers, $N_{ss}$ is the maximum number of spatial streams in the uplink (4 or 2), and $L(k)$ is the $k^{th}$ subcarrier value of a binary long training symbol pattern, which may be the 802.11n long training symbol for cases that use the same number as subcarriers as 802.11n. As an example, for the 8 spatial stream preamble in a 20 MHz channel, VHT- LTF0 has non- zero values only at tones {0, 8, 16, ..., 52}, while VHT- LTF1 has non- zero tones at {1, 9, 17, ..., 53} .

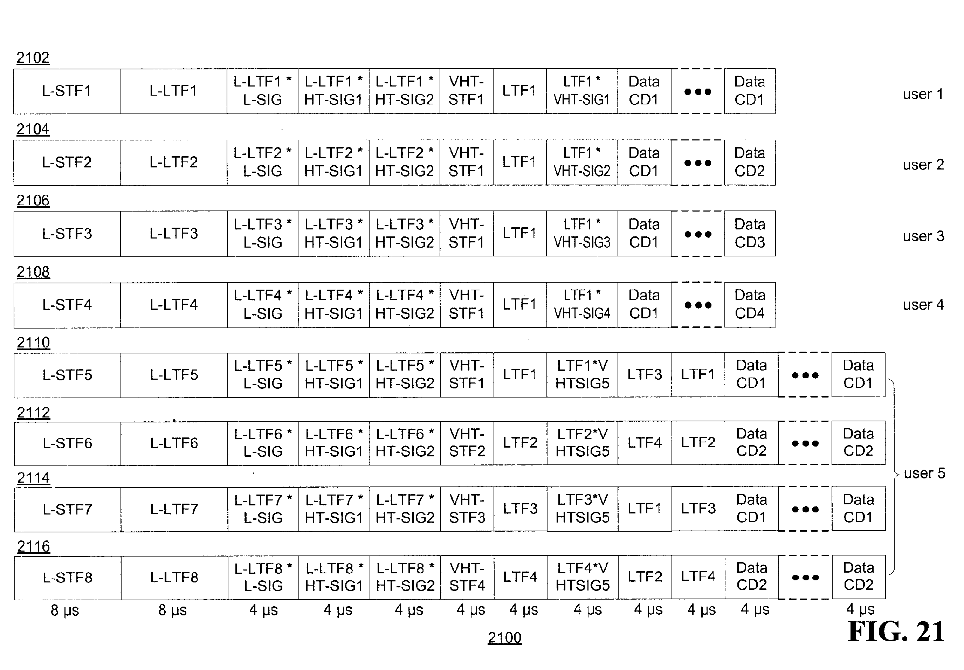

FIG. 21 is a diagram depicting a set of example alternative VHT-MM frame formats 2100, which includes alternative VHT-MM frame formats 2102-2118.

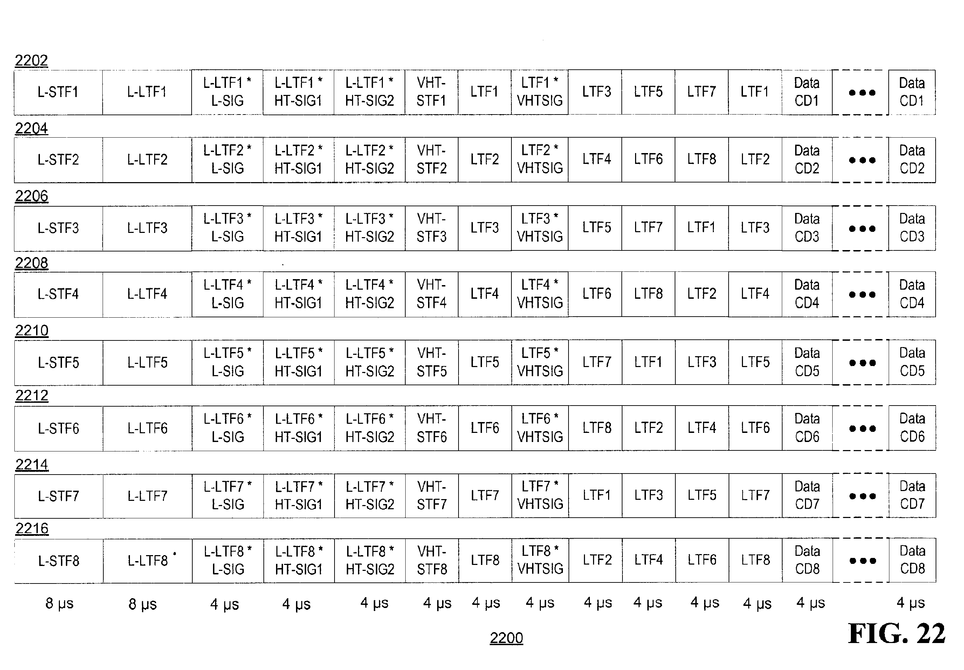

FIG. 22 is a diagram depicting a set of example alternative VHT-MM frame formats 2200 for open loop MIMO, which includes alternative VHT-MM frame formats 2202-2218.

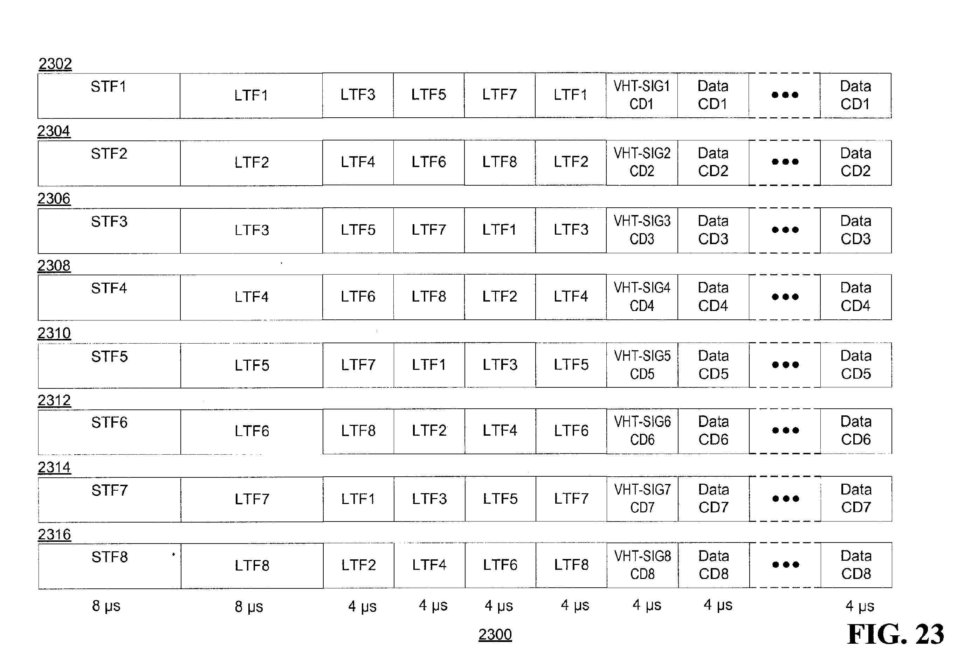

FIG. 23 is a diagram depicting a set of example alternative uplink frame formats 2300, which includes alternative uplink frame formats 2302-2316. Each uplink user uses a different subset of the available spatial streams ranging from 1-8 or 1-16. There is no mixed-mode preamble as it is assumed that there will always be an AP packet indicating the start of the uplink SDMA transmit operation.

VHT- SIG comes after all LTF symbols because the AP needs to do a MIMO detection on the different VHT-SIG per user. If a user transmits more than one spatial stream, its VHT- SIG content is the same on all streams it transmits. AP needs to know in advance how many spatial stream each user has. Uplink frame format may not be used for open- loop MIMO because it is not known in advance how many spatial streams there are, so there is a need to have a VHT SIG before all channel trainings.

It is understood that any specific order or hierarchy of steps described above is being presented to provide an example of the process involved in preamble unit. Based upon design preferences, it is understood that the specific order or hierarchy of steps may be rearranged while remaining within the scope of the invention.

The preamble unit, the OFDM modulator, and the OFDM demodulator may be implemented with one or more general purpose processors, digital signal processors (DSP)s, application specific integrated circuits (ASIC)s, field programmable gate array (FPGA)s, programmable logic devices (PLD)s, other programmable logic components, discrete gate or transistor logic, discrete hardware components, or any combination thereof designed to perform the functions described herein. A general purpose processor may be a microprocessor, a controller, a microcontroller, a state machine, or any other circuitry that can execute software. Software shall be construed broadly to mean instructions, data, or any combination thereof, whether referred to as software, firmware, middleware, microcode, hardware description language, or otherwise. Software may be stored on machine-readable media or embedded in one or more components such as a DSP or ASIC. Machine-readable media may include various memory components including, by way of example, Random Access Memory (RAM), flash memory, Read Only Memory (ROM), Programmable Read-Only Memory (PROM), Erasable Programmable Read-Only Memory (EPROM), Electrically Erasable Programmable Read-Only Memory (EEPROM), registers, magnetic disks, optical disks, hard drives, or any other suitable storage medium, or any combination thereof. Machine-readable media may also be include a transmission line, a carrier wave modulated by data, and/or other means for providing software to the wireless node. The machine-readable may be embodied in a computer-program product. The computer-program product may comprise packaging materials.

Whether the above mentioned units are implemented in hardware, software, or a combination thereof will depend upon the particular application and design constraints imposed on the overall system. Skilled artisans may implement the described functionality in varying ways for each particular application, but such implementation decisions should not be interpreted as causing a departure from the scope of the invention.

The previous description is provided to enable any person skilled in the art to fully understand the full scope of the invention. Modifications to the various configurations disclosed herein will be readily apparent to those skilled in the art. Thus, the claims are not intended to be limited to the various aspects of the invention described herein, but is to be accorded the full scope consistent with the language of claims, wherein reference to an element in the singular is not intended to mean "one and only one" unless specifically so stated, but rather "one or more." Unless specifically stated otherwise, the term "some" refers to one or more. All structural and functional equivalents to the elements of the various aspects described throughout this disclosure that are known or later come to be known to those of ordinary skill in the art are expressly incorporated herein by reference and are intended to be encompassed by the claims. Moreover, nothing disclosed herein is intended to be dedicated to the public regardless of whether such disclosure is explicitly recited in the claims. No claim element is to be construed under the provisions of 35 U.S.C. §112, sixth paragraph, unless the element is expressly recited using the phrase "means for" or, in the case of a method claim, the element is recited using the phrase "step for."

## FURTHER SUMMARY OF THE INVENTION:

1. An apparatus for communications, comprising:

a processing system configured to generate a plurality of spatial streams, wherein each of the spatial streams comprises a plurality of symbols, the processing system being further configured to distribute at least a portion of a training sequence across a first symbol in a first one of the spatial streams and a second symbol in a second one of the spatial streams.

2. The apparatus of 1, wherein the processing system is further configured to distribute a further portion of the training sequence into a third symbol in a third one of the spatial streams.

3. The apparatus of 1, wherein each of the first and second symbols comprises a plurality of subcarriers, the processing system being further configured to distribute said at least a portion of the training sequence across different subcarriers in the first and second symbols.

4. The apparatus of 1, wherein the processing system is further configured to cyclically delay the portion of the training sequence in the first symbol.

5. The apparatus of 1, wherein the first one of the symbols includes a plurality of subcarriers carrying a signal, the processing system being further configured to multiply the signal carried by the subcarriers by the portion of the training sequence in the first symbol.

6. The apparatus of 1, wherein the first symbol includes a plurality of in-band and out-of-band subcarriers, the processing system being further configured to distribute the portion of the training sequence in the first symbol across the in-band subcarriers.

7. The apparatus of 6, wherein the processing system is further configured to attenuate the out-of-band subcarriers.

8. The apparatus of 1, wherein the processing system is further configured to distribute a further portion of the training sequence into another symbol in the first one of the spatial streams that temporally follows the first symbol.

9. The apparatus of 1, wherein the processing system is further configured to distribute the portion of the training sequence in the first symbol into another symbol on a third one of the streams that temporally follows the first symbol.

10. The apparatus of 1, wherein the processing system is further configured to modulate at least one of the plurality of symbols with a spoof modulation scheme.

11. The apparatus of 1, wherein the processing system is further configured to modulate one of the plurality of symbols in the first one of the spatial streams with a first modulation scheme, and modulate another one of the plurality of symbols in the first one of the spatial streams with a second modulation scheme that is different from the first modulation scheme.

12. The apparatus of 1, wherein each of the spatial streams comprises at least one symbol comprising information indicating a length of data and a modulation scheme, and wherein said information is different for at least two of the spatial streams.

13. The apparatus of 1, wherein the processing system is further configured to distribute a further portion of the training sequence into a third symbol in the first one of the spatial streams that temporally follows the first symbol, and distribute the portion of the training sequence in the first symbol into a fourth symbol in the first one of the spatial streams that temporally follows the third symbol.

14. A method for communications, comprising:

generating a plurality of spatial streams, wherein each of the spatial streams comprises a plurality of symbols, and distributing at least a portion of a training sequence across a first symbol in a first one of the spatial streams and a second symbol in a second one of the spatial streams.

15. The method of 14 further comprising distributing a further portion of the training sequence into a third symbol in a third one of the spatial streams.

16. The method of 14 wherein each of the first and second symbols comprises a plurality of subcarriers, and said at least a portion of the training sequence are distributed across different subcarriers in the first and second symbols.

17. The method of 14 further comprising cyclically delaying the portion of the training sequence in the first symbol.

18. The method of 14 wherein the first one of the symbols includes a plurality of subcarriers carrying a signal, the method further comprising multiplying the signal carried by the subcarriers by the portion of the training sequence in the first symbol.

19. The method of 14 wherein the first symbol includes a plurality of in-band and out-of-band subcarriers, and the portion of the training sequence in the first symbol is distributed across the in-band subcarriers.

20. The method of 19 further comprising attenuating the out-of-band subcarriers.

21. The method of 14 further comprising distributing a further portion of the training sequence into another symbol in the first one of the spatial streams that temporally follows the first symbol.

22. The method of 14 further comprising distributing the portion of the training sequence in the first symbol into another symbol on a third one of the streams that temporally follows the first symbol.

23. The method of 14 further comprising modulating at least one of the plurality of symbols with a spoof modulation scheme.

24. The method of 14 further comprising modulating one of the plurality of symbols in the first one of the spatial streams with a first modulation scheme, and modulating another one of the plurality of symbols in the first one of the spatial streams with a second modulation scheme that is different from the first modulation scheme.

25. The method of 14 wherein each of the spatial streams comprises at least one symbol comprising information indicating a length of data and a modulation scheme, and wherein said information is different for at least two of the spatial streams.

26. The method of 14 further comprising distributing a further portion of the training sequence into a third symbol in the first one of the spatial streams that temporally follows the first symbol, and distributing the portion of the training sequence in the first symbol into a fourth symbol in the first one of the spatial streams that temporally follows the third symbol.

27. An apparatus for communications, comprising:

means for generating a plurality of spatial streams, wherein each of the spatial streams comprises a plurality of symbols, and
means for distributing at least a portion of a training sequence across a first symbol in a first one of the spatial streams and a second symbol in a second one of the spatial streams.

28. The apparatus of 14 further comprising means for distributing a further portion of the training sequence into a third symbol in a third one of the spatial streams.

29. The apparatus of 14 wherein each of the first and second symbols comprises a plurality of subcarriers, and said at least a portion of the training sequence are distributed across different subcarriers in the first and second symbols.

30. The apparatus of 14 further comprising means for cyclically delaying the portion of the training sequence in the first symbol.

31. The apparatus of 14 wherein the first one of the symbols includes a plurality of subcarriers carrying a signal, the apparatus further comprising means for multiplying the signal carried by the subcarriers by the portion of the training sequence in the first symbol.

32. The apparatus of 14 wherein the first symbol includes a plurality of in-band and out-of-band subcarriers, and the portion of the training sequence in the first symbol is distributed across the in-band subcarriers.

33. The apparatus of 19 further comprising means for attenuating the out-of-band subcarriers.

34. The apparatus of 14 further comprising means for distributing a further portion of the training sequence into another symbol in the first one of the spatial streams that temporally follows the first symbol.

35. The apparatus of 14 further comprising means for distributing the portion of the training sequence in the first symbol into another symbol on a third one of the streams that temporally follows the first symbol.

36. The apparatus of 14 further comprising means for modulating at least one of the plurality of symbols with a spoof modulation scheme.

37. The apparatus of 14 further comprising means for modulating one of the plurality of symbols in the first one of the spatial streams with a first modulation scheme, and means for modulating another one of the plurality of symbols in the first one of the spatial streams with a second modulation scheme that is different from the first modulation scheme.

38. The apparatus of 14 wherein each of the spatial streams comprises at least one symbol comprising information indicating a length of data and a modulation scheme, and wherein said information is different for at least two of the spatial streams.

39. The apparatus of 14 further comprising means for distributing a further portion of the training sequence into a third symbol in the first one of the spatial streams that temporally follows the first symbol, and means for distributing the portion of the training sequence in the first symbol into a fourth symbol in the first one of the spatial streams that temporally follows the third symbol.

40. A computer-program product for wireless communication, comprising:

a machine-readable medium encoded with instructions executable to:

generate a plurality of spatial streams, wherein each of the spatial streams comprises a plurality of symbols; and
distribute at least a portion of a training sequence across a first symbol in a first one of the spatial streams and a second symbol in a second one of the spatial streams.

41. An access point, comprising:

a wireless network adapter configured to support a backhaul connection for a peer node to a network; and
a processing system configured to generate a plurality of spatial streams, wherein each of the spatial streams comprises a plurality of symbols, the processing system being further configured to distribute at least a portion of a training sequence across a first symbol in a first one of the spatial streams and a second symbol in a second one of the spatial streams.

42. An access terminal, comprising:

a processing system configured to receive a plurality of spatial streams, wherein each of the spatial streams comprises a plurality of symbols, and wherein at least a portion of a training sequence is distributed across a first symbol in a first one of the spatial streams and a second symbol in a second one of the spatial streams; and
a user interface supported by the processing system.

**Claims**

1. A method for communications, comprising:

generating a frame comprising a preamble portion having four or more symbols designated as three or more signal (SIG) fields; and
transmitting the frame.

2. The method of claim 1, wherein at least one of the three or more SIG fields comprises a very high throughput signal (VHT-SIG) field.

3. The method of claim 1, further comprising modulating at least one of the four or more symbols with a rotated binary phase-shift keying (BPSK) modulation scheme.

4. The method of claim 1, wherein the preamble portion further comprises at least one of a non-high-throughput (non-HT) short training field (STF) or a non-HT long training field (LTF).

5. An apparatus for communications, comprising:

   means for generating a frame comprising a preamble portion having four or more symbols designated as three or more signal (SIG) fields; and
   means for transmitting the frame.

6. The apparatus of claim 5 or the method of claim 1, wherein a first SIG field compnses a non-highthroughput (non-HT) SIG field.

7. The apparatus of claim 5 or the method of claim 1, wherein a first SIG field comprises a first symbol of the four or more symbols.

8. The apparatus or method of claim 7, wherein a second SIG field comprises second and third symbols of the four or more symbols, subsequent to the first symbol.

9. The apparatus or method of claim 8, wherein a third SIG field comprises a fourth symbol of the four or more symbols, subsequent to the second and third symbols.

10. The apparatus or method of claim 9, wherein the third SIG field has at least one of a different sign or a different cyclic delay than the second SIG field.

11. The apparatus or method of claim 9, wherein pilot signals III the third SIG field are inverted.

12. The apparatus of claim 5, wherein at least one of the three or more SIG fields comprises a very high throughput signal (VHT -SIG) field.

13. The apparatus of claim 5, further comprising means for modulating at least one of the four or more symbols with a rotated binary phase-shift keying (BPSK) modulation scheme.

14. The apparatus of claim 5, wherein the preamble portion further comprises at least one of a non-high-throughput (non-HT) short training field (STF) or a non-HT long training field (LTF).

15. A computer-program product for wireless communication, comprising:

   a non-transitory machine-readable medium encoded with instructions executable to carry out the steps of any of methods 1 to 4 or 6 to 11.

WIRELESS NETWORK
100

AT
120

AT
120

AT
120

AT
120

AT
120

AP
110

AT
120

AT
120

AT
120

SYSTEM
CONTROLLER
130

TO OTHER ACCESS POINTS

TO OTHER NETWORKS

FIG. 1

EP 2 661 008 A1

WIRELESS NODE
200

FIG. 2

EP 2 661 008 A1

EP 2 661 008 A1

| STF 0 ns CD | LTF 0 ns CD | L-SIG 0 ns CD | HT-SIG1 0 ns CD | HT-SIG2 0 ns CD | HT-STF 0 ns CD | --→ To: A |
|---|---|---|---|---|---|---|
| 8 µs | 8 µs | 4 µs | 4 µs | 4 µs | 4 µs | 300 |

| A --→ | HT-LTF 0 ns CD | HT-SIG3 0 ns CD | -HT-LTF 0 ns CD | HT-LTF 0 ns CD | HT-LTF 0 ns CD | Data 0 ns CD | ••• | Data 0 ns CD |
|---|---|---|---|---|---|---|---|---|
| | 4 µs | 4 µs | 4 µs | 4 µs | 4 µs | 4 µs | | 4 µs |

302

| STF -50 ns CD | LTF -50 ns CD | L-SIG -50 ns CD | HT-SIG1 -50 ns CD | HT-SIG2 -50 ns CD | HT-STF -50 ns CD | --→ To: B |
|---|---|---|---|---|---|---|

| B --→ | HT-LTF -400 ns CD | HT-SIG3 -400 ns CD | -HT-LTF -400 ns CD | HT-LTF -400 ns CD | HT-LTF -400 ns CD | Data -400 ns CD | ••• | Data -400 ns CD |
|---|---|---|---|---|---|---|---|---|

304

| STF -100 ns CD | LTF -100 ns CD | L-SIG -100 ns CD | HT-SIG1 -100 ns CD | HT-SIG2 -100 ns CD | HT-STF -200 ns CD | --→ To: C |
|---|---|---|---|---|---|---|

| C --→ | HT-LTF -200 ns CD | HT-SIG3 -200 ns CD | -HT-LTF -200 ns CD | HT-LTF -200 ns CD | -HT-LTF -200 ns CD | Data -200 ns CD | ••• | Data -200 ns CD |
|---|---|---|---|---|---|---|---|---|

306

| STF -150 ns CD | LTF -150 ns CD | L-SIG -150 ns CD | HT-SIG1 -150 ns CD | HT-SIG2 -150 ns CD | HT-STF -600 ns CD | --→ To: D |
|---|---|---|---|---|---|---|

| D --→ | HT-LTF -600 ns CD | HT-SIG3 -600 ns CD | -HT-LTF -600 ns CD | HT-LTF -600 ns CD | HT-LTF -600 ns CD | Data -600 ns CD | ••• | Data -600 ns CD |
|---|---|---|---|---|---|---|---|---|

308

FIG. 3

| STF 0 ns CD | HT-LTF 0 ns CD | HT-SIG1 0 ns CD | HT-SIG2 0 ns CD | HT-SIG3 0 ns CD |
|---|---|---|---|---|

--> To: A    400

| 8 μs | 8 μs | 4 μs | 4 μs | 4 μs |

A -->

| -HT-LTF 0 ns CD | HT-LTF 0 ns CD | HT-LTF 0 ns CD | Data 0 ns CD | ••• | Data 0 ns CD |
|---|---|---|---|---|---|

402

| 4 μs | 4 μs | 4 μs | 4 μs | | 4 μs |

| STF -400 ns CD | HT-LTF -400 ns CD | HT-SIG1 -400 ns CD | HT-SIG2 -400 ns CD | HT-SIG3 -400 ns CD |
|---|---|---|---|---|

--> To: B

B -->

| HT-LTF -400 ns CD | -HT-LTF -400 ns CD | HT-LTF -400 ns CD | Data -400 ns CD | ••• | Data -400 ns CD |
|---|---|---|---|---|---|

404

| STF -200 ns CD | HT-LTF -200 ns CD | HT-SIG1 -200 ns CD | HT-SIG2 -200 ns CD | HT-SIG3 -200 ns CD |
|---|---|---|---|---|

--> To: C

C -->

| HT-LTF -200 ns CD | HT-LTF -200 ns CD | -HT-LTF -200 ns CD | Data -200 ns CD | ••• | Data -200 ns CD |
|---|---|---|---|---|---|

406

| STF -600 ns CD | -HT-LTF -600 ns CD | -HT-SIG1 -600 ns CD | -HT-SIG2 -600 ns CD | -HT-SIG3 -600 ns CD |
|---|---|---|---|---|

--> To: D

D -->

| HT-LTF -600 ns CD | HT-LTF -600 ns CD | HT-LTF -600 ns CD | Data -600 ns CD | ••• | Data -600 ns CD |
|---|---|---|---|---|---|

408

**FIG. 4**

EP 2 661 008 A1

**FIG. 5**

500

EP 2 661 008 A1

508

D --→  | HT-LTF -600 ns CD | HT-LTF -600 ns CD | HT-LTF -600 ns CD | ••• | Data -600 ns CD |

←-- To: D  | STF -600 ns CD | HT-LTF -600 ns CD | HT-SIG1 -600 ns CD | HT-SIG2 -600 ns CD | HT-SIG3 -600 ns CD | HT-LTF -600 ns CD |

506

C --→  | HT-LTF -200 ns CD | HT-LTF -200 ns CD | HT-LTF -200 ns CD | ••• | Data -200 ns CD |

←-- To: C  | STF -200 ns CD | HT-LTF -200 ns CD | HT-SIG1 -200 ns CD | HT-SIG2 -200 ns CD | HT-SIG3 -200 ns CD | HT-LTF -200 ns CD |

504

B --→  | HT-LTF -400 ns CD | HT-LTF -400 ns CD | HT-LTF -400 ns CD | ••• | Data -400 ns CD |

←-- To: B  | STF -400 ns CD | HT-LTF -400 ns CD | HT-SIG1 -400 ns CD | HT-SIG2 -400 ns CD | HT-SIG3 -400 ns CD | HT-LTF -400 ns CD |

502

A --→  | HT-LTF 0 ns CD (4 µs) | HT-LTF 0 ns CD (4 µs) | HT-LTF 0 ns CD (4 µs) | ••• (4 µs) | Data 0 ns CD (4 µs) |

←-- To: A  | STF 0 ns CD (8 µs) | HT-LTF 0 ns CD (8 µs) | HT-SIG1 0 ns CD (4 µs) | HT-SIG2 0 ns CD (4 µs) | HT-SIG3 0 ns CD (4 µs) | HT-LTF 0 ns CD (4 µs) |

18

EP 2 661 008 A1

| STF<br>0 ns CD | HT-LTF<br>0 ns CD | HT-SIG3<br>0 ns CD | -HT-LTF<br>0 ns CD | HT-LTF<br>0 ns CD | HT-LTF<br>0 ns CD | Data<br>0 ns CD | ● ● ● | Data<br>0 ns CD |
|---|---|---|---|---|---|---|---|---|
| 8 μs | 8 μs | 4 μs | 4 μs | 4 μs | 4 μs | 4 μs | | 4 μs |

602

| STF<br>-400 ns CD | HT-LTF<br>-400 ns CD | HT-SIG3<br>-400 ns CD | HT-LTF<br>-400 ns CD | -HT-LTF<br>-400 ns CD | HT-LTF<br>-400 ns CD | Data<br>-400 ns CD | ● ● ● | Data<br>-400 ns CD |
|---|---|---|---|---|---|---|---|---|

604

| STF<br>-200 ns CD | HT-LTF<br>-200 ns CD | HT-SIG3<br>-200 ns CD | HT-LTF<br>-200 ns CD | HT-LTF<br>-200 ns CD | -HT-LTF<br>-200 ns CD | Data<br>-200 ns CD | ● ● ● | Data<br>-200 ns CD |
|---|---|---|---|---|---|---|---|---|

606

| STF<br>-600 ns CD | -HT-LTF<br>-600 ns CD | -HT-SIG3<br>-600 ns CD | HT-LTF<br>-600 ns CD | HT-LTF<br>-600 ns CD | HT-LTF<br>-600 ns CD | Data<br>-600 ns CD | ● ● ● | Data<br>-600 ns CD |
|---|---|---|---|---|---|---|---|---|

608

600

**FIG. 6**

| STF 0 ns CD | LTF 0 ns CD | L-SIG 0 ns CD | HT-SIG1 0 ns CD | HT-SIG2 0 ns CD | HT-STF 0 ns CD | HT-LTF 0 ns CD | HT-SIG3 0 ns CD |
|---|---|---|---|---|---|---|---|
| 8 µs | 8 µs | 4 µs | 4 µs | 4 µs | 4 µs | 4 µs | 4 µs |

⌐ -> To: A

| HT-STF 0 ns CD | HT-LTF 0 ns CD | -HT-LTF 0 ns CD | HT-LTF 0 ns CD | HT-LTF 0 ns CD | Data 0 ns CD | • • • | Data 0 ns CD |
|---|---|---|---|---|---|---|---|
| 4 µs | 4 µs | 4 µs | 4 µs | 4 µs | 4 µs | | 4 µs |

A -->

702

| STF -50 ns CD | LTF -50 ns CD | L-SIG -50 ns CD | HT-SIG1 -50 ns CD | HT-SIG2 -50 ns CD | HT-STF -400 ns CD | HT-LTF -400 ns CD | HT-SIG3 -400 ns CD |
|---|---|---|---|---|---|---|---|

⌐ -> To: B

| HT-STF -400 ns CD | HT-LTF -400 ns CD | HT-LTF -400 ns CD | -HT-LTF -400 ns CD | HT-LTF -400 ns CD | Data -400 ns CD | • • • | Data -400 ns CD |
|---|---|---|---|---|---|---|---|

B -->

704

| STF -100 ns CD | LTF -100 ns CD | L-SIG -100 ns CD | HT-SIG1 -100 ns CD | HT-SIG2 -100 ns CD | HT-STF -200 ns CD | HT-LTF -200 ns CD | HT-SIG3 -200 ns CD |
|---|---|---|---|---|---|---|---|

⌐ -> To: C

| HT-STF -200 ns CD | HT-LTF -200 ns CD | HT-LTF -200 ns CD | HT-LTF -200 ns CD | -HT-LTF -200 ns CD | Data -200 ns CD | • • • | Data -200 ns CD |
|---|---|---|---|---|---|---|---|

C -->

706

| STF -150 ns CD | LTF -150 ns CD | L-SIG -150 ns CD | HT-SIG1 -150 ns CD | HT-SIG2 -150 ns CD | HT-STF -600 ns CD | HT-LTF -600 ns CD | HT-SIG3 -600 ns CD |
|---|---|---|---|---|---|---|---|

⌐ -> To: D

| HT-STF -600 ns CD | HT-LTF -600 ns CD | HT-LTF -600 ns CD | HT-LTF -600 ns CD | -HT-LTF -600 ns CD | Data -600 ns CD | • • • | Data -600 ns CD |
|---|---|---|---|---|---|---|---|

D -->

708

700

**FIG. 7**

800

Shortened channel training for 4
spatial streams

| HT-LTF<br>0 ns CD | HT-LTF<br>0 ns CD | 802 |
|---|---|---|

| HT-LTF<br>1600 ns CD | HT-LTF<br>1600 ns CD | 804 |
|---|---|---|

| HT-LTF<br>-200 ns CD | -HT-LTF<br>-200 ns CD | 806 |
|---|---|---|

| HT-LTF<br>1400 ns CD | -HT-LTF<br>1400 ns CD | 808 |
|---|---|---|

4 µs      4 µs

FIG. 8

900

| HT-LTF<br>0 ns CD | HT-LTF<br>0 ns CD | HT-LTF<br>0 ns CD | HT-LTF<br>0 ns CD | 902 |

| HT-LTF<br>1600 ns CD | HT-LTF<br>1600 ns CD | HT-LTF<br>1600 ns CD | HT-LTF<br>1600 ns CD | 904 |

| HT-LTF<br>-200 ns CD | -HT-LTF<br>-200 ns CD | HT-LTF<br>-200 ns CD | -HT-LTF<br>-200 ns CD | 906 |

| HT-LTF<br>1400 ns CD | -HT-LTF<br>1400 ns CD | HT-LTF<br>1400 ns CD | -HT-LTF<br>1400 ns CD | 908 |

| HT-LTF<br>0 ns CD | HT-LTF<br>0 ns CD | -HT-LTF<br>0 ns CD | -HT-LTF<br>0 ns CD | 910 |

| HT-LTF<br>1600 ns CD | HT-LTF<br>1600 ns CD | -HT-LTF<br>1600 ns CD | -HT-LTF<br>1600 ns CD | 912 |

| HT-LTF<br>-200 ns CD | -HT-LTF<br>-200 ns CD | -HT-LTF<br>-200 ns CD | HT-LTF<br>-200 ns CD | 914 |

| HT-LTF<br>1400 ns CD | -HT-LTF<br>1400 ns CD | -HT-LTF<br>1400 ns CD | HT-LTF<br>1400 ns CD | 916 |

4 μs          4 μs          4 μs          4 μs

# FIG. 9

1000

1002
| HT-LTF<br>0 ns CD | HT-LTF<br>0 ns CD |
|---|---|

1004
| HT-LTF<br>800 ns CD | HT-LTF<br>800 ns CD |
|---|---|

1006
| HT-LTF<br>1600 ns CD | HT-LTF<br>1600 ns CD |
|---|---|

1008
| HT-LTF<br>2400 ns CD | HT-LTF<br>2400 ns CD |
|---|---|

1010
| HT-LTF<br>0 ns CD | -HT-LTF<br>0 ns CD |
|---|---|

1012
| HT-LTF<br>800 ns CD | -HT-LTF<br>800 ns CD |
|---|---|

1014
| HT-LTF<br>1600 ns CD | -HT-LTF<br>1600 ns CD |
|---|---|

1016
| HT-LTF<br>2400 ns CD | -HT-LTF<br>2400 ns CD |
|---|---|

4 μs          4 μs

·

**FIG. 10**

EP 2 661 008 A1

**1102**

| STF | HT-LTF | HT-SIG3 | HT-LTF | HT-LTF | HT-LTF | Data | | Data |
|---|---|---|---|---|---|---|---|---|
| 0 ns CD | 0 ns CD | 0 ns CD | 0 ns CD | 0 ns CD | 0 ns CD | 0 ns CD | ••• | 0 ns CD |

**1104**

| STF | HT-LTF | HT-SIG3 | HT-LTF | HT-LTF | HT-LTF | Data | | Data |
|---|---|---|---|---|---|---|---|---|
| -400 ns CD | 1600 ns CD | 1600 ns CD | 1600 ns CD | 1600 ns CD | 1600 ns CD | 1600 ns CD | ••• | 1600 ns CD |

**1106**

| STF | HT-LTF | HT-SIG3 | -HT-LTF | HT-LTF | -HT-LTF | Data | | Data |
|---|---|---|---|---|---|---|---|---|
| -200 ns CD | -200 ns CD | -200 ns CD | -200 ns CD | -200 ns CD | -200 ns CD | -200 ns CD | ••• | -200 ns CD |

**1108**

| STF | -HT-LTF | -HT-SIG3 | -HT-LTF | HT-LTF | -HT-LTF | Data | | Data |
|---|---|---|---|---|---|---|---|---|
| -600 ns CD | 1400 ns CD | 1400 ns CD | 1400 ns CD | 1400 ns CD | 1400 ns CD | 1400 ns CD | ••• | 1400 ns CD |

**1110**

| STF | HT-LTF | HT-SIG3 | HT-LTF | -HT-LTF | -HT-LTF | Data | | Data |
|---|---|---|---|---|---|---|---|---|
| -100 ns CD | -100 ns CD | -100 ns CD | -100 ns CD | -100 ns CD | -100 ns CD | -100 ns CD | ••• | -100 ns CD |

**1112**

| STF | HT-LTF | HT-SIG3 | HT-LTF | -HT-LTF | -HT-LTF | Data | | Data |
|---|---|---|---|---|---|---|---|---|
| -500 ns CD | 1500 ns CD | 1500 ns CD | 1500 ns CD | 1500 ns CD | 1500 ns CD | 1500 ns CD | ••• | 1500 ns CD |

**1114**

| STF | HT-LTF | HT-SIG3 | -HT-LTF | -HT-LTF | HT-LTF | Data | | Data |
|---|---|---|---|---|---|---|---|---|
| -300 ns CD | -300 ns CD | -300 ns CD | -300 ns CD | -300 ns CD | -300 ns CD | -300 ns CD | ••• | -300 ns CD |

**1116**

| STF | -HT-LTF | -HT-SIG3 | -HT-LTF | -HT-LTF | HT-LTF | Data | | Data |
|---|---|---|---|---|---|---|---|---|
| -700 ns CD | 1300 ns CD | 1300 ns CD | 1300 ns CD | 1300 ns CD | 1300 ns CD | 1300 ns CD | ••• | 1300 ns CD |

| 8 µs | 8 µs | 4 µs | 6 µs | 6 µs | 6 µs | 4 µs | 4 µs |
|---|---|---|---|---|---|---|---|

**1100**

**FIG. 11**

1200

| | | | | | | | |
|---|---|---|---|---|---|---|---|
| **1202** HT-LTF 0 ns CD | HT-LTF 0 ns CD | HT-LTF 0 ns CD | HT-LTF 0 ns CD | HT-LTF 0 ns CD | HT-LTF 0 ns CD | HT-LTF 0 ns CD | HT-LTF 0 ns CD |
| **1204** HT-LTF 1600 ns CD | HT-LTF 1600 ns CD | HT-LTF 1600 ns CD | HT-LTF 1600 ns CD | HT-LTF 1600 ns CD | HT-LTF 1600 ns CD | HT-LTF 1600 ns CD | HT-LTF 1600 ns CD |
| **1206** HT-LTF -200 ns CD | -HT-LTF -200 ns CD | HT-LTF -200 ns CD | -HT-LTF -200 ns CD | HT-LTF -200 ns CD | -HT-LTF -200 ns CD | HT-LTF -200 ns CD | -HT-LTF -200 ns CD |
| **1208** HT-LTF 1400 ns CD | -HT-LTF 1400 ns CD | HT-LTF 1400 ns CD | -HT-LTF 1400 ns CD | HT-LTF 1400 ns CD | -HT-LTF 1400 ns CD | HT-LTF 1400 ns CD | -HT-LTF 1400 ns CD |
| **1210** HT-LTF 0 ns CD | HT-LTF 0 ns CD | -HT-LTF 0 ns CD | -HT-LTF 0 ns CD | HT-LTF 0 ns CD | HT-LTF 0 ns CD | -HT-LTF 0 ns CD | -HT-LTF 0 ns CD |
| **1212** HT-LTF 1600 ns CD | HT-LTF 1600 ns CD | -HT-LTF 1600 ns CD | -HT-LTF 1600 ns CD | HT-LTF 1600 ns CD | HT-LTF 1600 ns CD | -HT-LTF 1600 ns CD | -HT-LTF 1600 ns CD |
| **1214** HT-LTF -200 ns CD | -HT-LTF -200 ns CD | -HT-LTF -200 ns CD | HT-LTF -200 ns CD | HT-LTF -200 ns CD | -HT-LTF -200 ns CD | -HT-LTF -200 ns CD | HT-LTF -200 ns CD |
| **1216** HT-LTF 1400 ns CD | -HT-LTF 1400 ns CD | -HT-LTF 1400 ns CD | HT-LTF 1400 ns CD | HT-LTF 1400 ns CD | -HT-LTF 1400 ns CD | -HT-LTF 1400 ns CD | HT-LTF 1400 ns CD |
| **1218** HT-LTF 0 ns CD | HT-LTF 0 ns CD | HT-LTF 0 ns CD | HT-LTF 0 ns CD | -HT-LTF 0 ns CD | -HT-LTF 0 ns CD | -HT-LTF 0 ns CD | -HT-LTF 0 ns CD |
| **1220** HT-LTF 1600 ns CD | HT-LTF 1600 ns CD | HT-LTF 1600 ns CD | HT-LTF 1600 ns CD | -HT-LTF 1600 ns CD | -HT-LTF 1600 ns CD | -HT-LTF 1600 ns CD | -HT-LTF 1600 ns CD |
| **1222** HT-LTF -200 ns CD | -HT-LTF -200 ns CD | HT-LTF -200 ns CD | -HT-LTF -200 ns CD | -HT-LTF -200 ns CD | HT-LTF -200 ns CD | -HT-LTF -200 ns CD | HT-LTF -200 ns CD |
| **1224** HT-LTF 1400 ns CD | -HT-LTF 1400 ns CD | HT-LTF 1400 ns CD | -HT-LTF 1400 ns CD | -HT-LTF 1400 ns CD | HT-LTF 1400 ns CD | -HT-LTF 1400 ns CD | HT-LTF 1400 ns CD |
| **1226** HT-LTF 0 ns CD | HT-LTF 0 ns CD | -HT-LTF 0 ns CD | -HT-LTF 0 ns CD | -HT-LTF 0 ns CD | -HT-LTF 0 ns CD | HT-LTF 0 ns CD | HT-LTF 0 ns CD |
| **1228** HT-LTF 1600 ns CD | HT-LTF 1600 ns CD | -HT-LTF 1600 ns CD | -HT-LTF 1600 ns CD | -HT-LTF 1600 ns CD | -HT-LTF 1600 ns CD | HT-LTF 1600 ns CD | HT-LTF 1600 ns CD |
| **1230** HT-LTF -200 ns CD | -HT-LTF -200 ns CD | -HT-LTF -200 ns CD | HT-LTF -200 ns CD | -HT-LTF -200 ns CD | HT-LTF -200 ns CD | HT-LTF -200 ns CD | -HT-LTF -200 ns CD |
| **1232** HT-LTF 1400 ns CD | -HT-LTF 1400 ns CD | -HT-LTF 1400 ns CD | HT-LTF 1400 ns CD | -HT-LTF 1400 ns CD | HT-LTF 1400 ns CD | HT-LTF 1400 ns CD | -HT-LTF 1400 ns CD |
| 4 µs | 4 µs | 4 µs | 4 µs | 4 µs | 4 µs | 4 µs | 4 µs |

**FIG. 12**

1302

| STF1 | LTF1 | LTF1*VHTSIG | LTF1 | LTF1 | LTF1 | Data CD1 | • • • | Data CD1 |
|---|---|---|---|---|---|---|---|---|

1304

| STF2 | LTF2 | LTF2*VHTSIG | LTF2 | LTF2 | LTF2 | Data CD2 | • • • | Data CD2 |
|---|---|---|---|---|---|---|---|---|

1306

| STF3 | LTF3 | LTF3*VHTSIG | -LTF3 | LTF3 | -LTF3 | Data CD3 | • • • | Data CD3 |
|---|---|---|---|---|---|---|---|---|

1308

| STF4 | LTF4 | LTF4*VHTSIG | -LTF4 | LTF4 | -LTF4 | Data CD4 | • • • | Data CD4 |
|---|---|---|---|---|---|---|---|---|

1310

| STF5 | LTF5 | LTF5*VHTSIG | LTF5 | -LTF5 | -LTF5 | Data CD5 | • • • | Data CD5 |
|---|---|---|---|---|---|---|---|---|

1312

| STF6 | LTF6 | LTF6*VHTSIG | LTF6 | -LTF6 | -LTF6 | Data CD6 | • • • | Data CD6 |
|---|---|---|---|---|---|---|---|---|

1314

| STF7 | LTF7 | LTF7*VHTSIG | -LTF7 | -LTF7 | LTF7 | Data CD7 | • • • | Data CD7 |
|---|---|---|---|---|---|---|---|---|

1316

| STF8 | LTF8 | LTF8*VHTSIG | -LTF8 | -LTF8 | LTF8 | Data CD8 | • • • | Data CD8 |
|---|---|---|---|---|---|---|---|---|

| 8 µs | 8 µs | 4 µs | 6 µs | 6 µs | 6 µs | 4 µs | | 4 µs |

1300

FIG. 13

EP 2 661 008 A1

1402

| STF1 | LTF1 | LTF1*VHTSIG1 | Data CD1 | • • • | Data CD1 |
|------|------|--------------|----------|-------|----------|

user 1

1404

| STF1 | LTF1 | LTF1*VHTSIG2 | Data CD1 | • • • | Data CD1 |
|------|------|--------------|----------|-------|----------|

user 2

1406

| STF1 | LTF1 | LTF1*VHTSIG3 | Data CD1 | • • • | Data CD1 |
|------|------|--------------|----------|-------|----------|

user 3

1408

| STF1 | LTF1 | LTF1*VHTSIG4 | Data CD1 | • • • | Data CD1 |
|------|------|--------------|----------|-------|----------|

user 4

1410

| STF1 | LTF1 | LTF1*VHTSIG5 | LTF1 | Data CD1 | • • • | Data CD1 |
|------|------|--------------|------|----------|-------|----------|

1412

| STF2 | LTF2 | LTF2*VHTSIG5 | -LTF2 | Data CD2 | • • • | Data CD2 |
|------|------|--------------|-------|----------|-------|----------|

} user 5

1414

| STF1 | LTF1 | LTF1*VHTSIG6 | LTF1 | Data CD1 | • • • | Data CD1 |
|------|------|--------------|------|----------|-------|----------|

1416

| STF2 | LTF2 | LTF2*VHTSIG6 | -LTF2 | Data CD2 | • • • | Data CD2 |
|------|------|--------------|-------|----------|-------|----------|

} user 6

| 8 µs | 8 µs | 4 µs | 4 µs | 4 µs | 4 µs | 4 µs |
|------|------|------|------|------|------|------|

1400

**FIG. 14**

EP 2 661 008 A1

| | | | | | | | | |
|---|---|---|---|---|---|---|---|---|
| STF1 | LTF1 | LTF1*VHTSIG1 | LTF1 | LTF1 | LTF1 | Data CD1 | • • • | Data CD1 |

1502

| | | | | | | | | |
|---|---|---|---|---|---|---|---|---|
| STF2 | LTF2 | LTF2*VHTSIG2 | LTF2 | LTF2 | LTF2 | Data CD2 | • • • | Data CD2 |

1504

| | | | | | | | | |
|---|---|---|---|---|---|---|---|---|
| STF3 | LTF3 | LTF3*VHTSIG3 | -LTF3 | LTF3 | -LTF3 | Data CD3 | • • • | Data CD3 |

1506

| | | | | | | | | |
|---|---|---|---|---|---|---|---|---|
| STF4 | LTF4 | LTF4*VHTSIG4 | -LTF4 | LTF4 | -LTF4 | Data CD4 | • • • | Data CD4 |

1508

| | | | | | | | | |
|---|---|---|---|---|---|---|---|---|
| STF5 | LTF5 | LTF5*VHTSIG5 | LTF5 | -LTF5 | -LTF5 | Data CD5 | • • • | Data CD5 |

1510

| | | | | | | | | |
|---|---|---|---|---|---|---|---|---|
| STF6 | LTF6 | LTF6*VHTSIG6 | LTF6 | -LTF6 | -LTF6 | Data CD6 | • • • | Data CD6 |

1512

| | | | | | | | | |
|---|---|---|---|---|---|---|---|---|
| STF7 | LTF7 | LTF7*VHTSIG7 | -LTF7 | -LTF7 | LTF7 | Data CD7 | • • • | Data CD7 |

1514

| | | | | | | | | |
|---|---|---|---|---|---|---|---|---|
| STF8 | LTF8 | LTF8*VHTSIG8 | -LTF8 | -LTF8 | LTF8 | Data CD8 | • • • | Data CD8 |

1516

| 8 µs | 8 µs | 4 µs | 4 µs | 4 µs | 4 µs | 4 µs | | 4 µs |

1500

**FIG. 15**

1602

| L-STF1 | L-LTF1 | L-LTF1 * L-SIG | L-LTF1 * HT-SIG1 | L-LTF1 * HT-SIG2 | VHT-STF1 | LTF1 | LTF1 * VHT-SIG1 | Data CD1 | ••• | Data CD1 | user 1 |

1604

| L-STF2 | L-LTF2 | L-LTF2 * L-SIG | L-LTF2 * HT-SIG1 | L-LTF2 * HT-SIG2 | VHT-STF1 | LTF1 | LTF1 * VHT-SIG2 | Data CD1 | ••• | Data CD2 | user 2 |

1606

| L-STF3 | L-LTF3 | L-LTF3 * L-SIG | L-LTF3 * HT-SIG1 | L-LTF3 * HT-SIG2 | VHT-STF1 | LTF1 | LTF1 * VHT-SIG3 | Data CD1 | ••• | Data CD3 | user 3 |

1608

| L-STF4 | L-LTF4 | L-LTF4 * L-SIG | L-LTF4 * HT-SIG1 | L-LTF4 * HT-SIG2 | VHT-STF1 | LTF1 | LTF1 * VHT-SIG4 | Data CD1 | ••• | Data CD4 | user 4 |

1610

| L-STF5 | L-LTF5 | L-LTF5 * L-SIG | L-LTF5 * HT-SIG1 | L-LTF5 * HT-SIG2 | VHT-STF1 | LTF1 | LTF1 * VHT-SIG5 | LTF1 | Data CD1 | ••• | Data CD1 |

1612

| L-STF6 | L-LTF6 | L-LTF6 * L-SIG | L-LTF6 * HT-SIG1 | L-LTF6 * HT-SIG2 | VHT-STF2 | LTF2 | LTF2 * VHT-SIG5 | -LTF2 | Data CD2 | ••• | Data CD2 | } user 5 |

1614

| L-STF7 | L-LTF7 | L-LTF7 * L-SIG | L-LTF7 * HT-SIG1 | L-LTF7 * HT-SIG2 | VHT-STF1 | LTF1 | LTF1 * VHT-SIG6 | LTF1 | Data CD1 | ••• | Data CD1 |

1616

| L-STF8 | L-LTF8 | L-LTF8 * L-SIG | L-LTF8 * HT-SIG1 | L-LTF8 * HT-SIG2 | VHT-STF2 | LTF2 | LTF2 * VHT-SIG6 | -LTF2 | Data CD2 | ••• | Data CD2 | } user 6 |

8 µs | 8 µs | 4 µs | 4 µs | 4 µs | 4 µs | 4 µs | 4 µs | 4 µs | 4 µs | 4 µs

1600

**FIG. 16**

EP 2 661 008 A1

| | | | | | | | | | | | | | |
|---|---|---|---|---|---|---|---|---|---|---|---|---|---|
| **1702** | L-STF1 | L-LTF1 | L-LTF1 * L-SIG | L-LTF1 * HT-SIG1 | L-LTF1 * HT-SIG2 | VHT-STF1 | LTF1 | LTF1 * VHT-SIG1 | LTF1 | LTF1 | LTF1 | Data CD1 | ••• | Data CD1 |
| **1704** | L-STF2 | L-LTF2 | L-LTF2 * L-SIG | L-LTF2 * HT-SIG1 | L-LTF2 * HT-SIG2 | VHT-STF2 | LTF2 | LTF2 * VHT-SIG2 | LTF2 | LTF2 | LTF2 | Data CD2 | ••• | Data CD2 |
| **1706** | L-STF3 | L-LTF3 | L-LTF3 * L-SIG | L-LTF3 * HT-SIG1 | L-LTF3 * HT-SIG2 | VHT-STF3 | LTF3 | LTF3 * VHT-SIG3 | -LTF3 | LTF3 | -LTF3 | Data CD3 | ••• | Data CD3 |
| **1708** | L-STF4 | L-LTF4 | L-LTF4 * L-SIG | L-LTF4 * HT-SIG1 | L-LTF4 * HT-SIG2 | VHT-STF4 | LTF4 | LTF4 * VHT-SIG4 | -LTF4 | LTF4 | -LTF4 | Data CD4 | ••• | Data CD4 |
| **1710** | L-STF5 | L-LTF5 | L-LTF5 * L-SIG | L-LTF5 * HT-SIG1 | L-LTF5 * HT-SIG2 | VHT-STF5 | LTF5 | LTF5 * VHT-SIG5 | LTF5 | -LTF5 | -LTF5 | Data CD5 | ••• | Data CD5 |
| **1712** | L-STF6 | L-LTF6 | L-LTF6 * L-SIG | L-LTF6 * HT-SIG1 | L-LTF6 * HT-SIG2 | VHT-STF6 | LTF6 | LTF6 * VHT-SIG6 | LTF6 | -LTF6 | -LTF6 | Data CD6 | ••• | Data CD6 |
| **1714** | L-STF7 | L-LTF7 | L-LTF7 * L-SIG | L-LTF7 * HT-SIG1 | L-LTF7 * HT-SIG2 | VHT-STF7 | LTF7 | LTF7 * VHT-SIG7 | -LTF7 | -LTF7 | LTF7 | Data CD7 | ••• | Data CD7 |
| **1716** | L-STF8 | L-LTF8 | L-LTF8 * L-SIG | L-LTF8 * HT-SIG1 | L-LTF8 * HT-SIG2 | VHT-STF8 | LTF8 | LTF8 * VHT-SIG8 | -LTF8 | -LTF8 | LTF8 | Data CD8 | ••• | Data CD8 |
| | 8 µs | 8 µs | 4 µs | 4 µs | 4 µs | 4 µs | 4 µs | 4 µs | 4 µs | 4 µs | 4 µs | 4 µs | | 4 µs |

1700

**FIG. 17**

1802

| STF1 | LTF1 | LTF1 | LTF1 | LTF1 | VHT-SIG1 CD1 | Data CD1 | ••• | Data CD1 |
|---|---|---|---|---|---|---|---|---|

1804

| STF2 | LTF2 | LTF2 | LTF2 | LTF2 | VHT-SIG2 CD2 | Data CD2 | ••• | Data CD2 |
|---|---|---|---|---|---|---|---|---|

1806

| STF3 | LTF3 | -LTF3 | LTF3 | -LTF3 | VHT-SIG3 CD3 | Data CD3 | ••• | Data CD3 |
|---|---|---|---|---|---|---|---|---|

1808

| STF4 | LTF4 | -LTF4 | LTF4 | -LTF4 | VHT-SIG4 CD4 | Data CD4 | ••• | Data CD4 |
|---|---|---|---|---|---|---|---|---|

1810

| STF5 | LTF5 | LTF5 | -LTF5 | -LTF5 | VHT-SIG5 CD5 | Data CD5 | ••• | Data CD5 |
|---|---|---|---|---|---|---|---|---|

1812

| STF6 | LTF6 | LTF6 | -LTF6 | -LTF6 | VHT-SIG6 CD6 | Data CD6 | ••• | Data CD6 |
|---|---|---|---|---|---|---|---|---|

1814

| STF7 | LTF7 | -LTF7 | -LTF7 | LTF7 | VHT-SIG7 CD7 | Data CD7 | ••• | Data CD7 |
|---|---|---|---|---|---|---|---|---|

1816

| STF8 | LTF8 | -LTF8 | -LTF8 | LTF8 | VHT-SIG8 CD8 | Data CD8 | ••• | Data CD8 |
|---|---|---|---|---|---|---|---|---|

| 8 µs | 8 µs | 4 µs | 4 µs | 4 µs | 4 µs | 4 µs | | 4 µs |

1800

**FIG. 18**

| 1902 | | | | | | user 1 |
|---|---|---|---|---|---|---|
| STF1 | LTF1 | LTF1*VHTSIG1 | Data CD1 | • • • | Data CD1 | |

| 1904 | | | | | | user 2 |
|---|---|---|---|---|---|---|
| STF1 | LTF1 | LTF1*VHTSIG2 | Data CD1 | • • • | Data CD1 | |

| 1906 | | | | | | user 3 |
|---|---|---|---|---|---|---|
| STF1 | •      LTF1 | LTF1*VHTSIG3 | Data CD1 | • • • | Data CD1 | |

| 1908 | | | | | | user 4 |
|---|---|---|---|---|---|---|
| STF1 | LTF1 | LTF1*VHTSIG4 | Data CD1 | • • • | Data CD1 | |

| 1910 | | | | | | | | |
|---|---|---|---|---|---|---|---|---|
| STF1 | LTF1 | LTF1*VHTSIG5 | LTF3 | LTF1 | Data CD1 | • • • | Data CD1 | |

| 1912 | | | | | | | | |
|---|---|---|---|---|---|---|---|---|
| STF2 | LTF2 | LTF2*VHTSIG5 | LTF4 | LTF2 | Data CD2 | • • • | Data CD2 | user 5 |

| 1914 | | | | | | | | |
|---|---|---|---|---|---|---|---|---|
| STF1 | LTF3 | LTF3*VHTSIG5 | LTF1 | LTF3 | Data CD1 | • • • | Data CD1 | |

| 1916 | | | | | | | | |
|---|---|---|---|---|---|---|---|---|
| STF2 | LTF4 | LTF4*VHTSIG5 | LTF2 | LTF4 | Data CD2 | • • • | Data CD2 | |

| 8 μs | 8 μs | 4 μs | 4 μs | 4 μs | 4 μs | 4 μs | 4 μs |

1900

**FIG. 19**

EP 2 661 008 A1

2002

| STF1 | LTF1 | LTF1*VHTSIG | LTF3 | LTF5 | LTF7 | LTF1 | Data CD1 | ••• | Data CD1 |
|------|------|-------------|------|------|------|------|----------|-----|----------|

2004

| STF2 | LTF2 | LTF2*VHTSIG | LTF4 | LTF6 | LTF8 | LTF2 | Data CD2 | ••• | Data CD2 |
|------|------|-------------|------|------|------|------|----------|-----|----------|

2006

| STF3 | LTF3 | LTF3*VHTSIG | LTF5 | LTF7 | LTF1 | LTF3 | Data CD3 | ••• | Data CD3 |
|------|------|-------------|------|------|------|------|----------|-----|----------|

2008

| STF4 | LTF4 | LTF4*VHTSIG | LTF6 | LTF8 | LTF2 | LTF4 | Data CD4 | ••• | Data CD4 |
|------|------|-------------|------|------|------|------|----------|-----|----------|

2010

| STF5 | LTF5 | LTF5*VHTSIG | LTF7 | LTF1 | LTF3 | LTF5 | Data CD5 | ••• | Data CD5 |
|------|------|-------------|------|------|------|------|----------|-----|----------|

2012

| STF6 | LTF6 | LTF6*VHTSIG | LTF8 | LTF2 | LTF4 | LTF6 | Data CD6 | ••• | Data CD6 |
|------|------|-------------|------|------|------|------|----------|-----|----------|

2014

| STF7 | LTF7 | LTF7*VHTSIG | LTF1 | LTF3 | LTF5 | LTF7 | Data CD7 | ••• | Data CD7 |
|------|------|-------------|------|------|------|------|----------|-----|----------|

2016

| STF8 | LTF8 | LTF8*VHTSIG | LTF2 | LTF4 | LTF6 | LTF8 | Data CD8 | ••• | Data CD8 |
|------|------|-------------|------|------|------|------|----------|-----|----------|

8 μs · 8 μs · 4 μs · 4 μs · 4 μs · 4 μs · 4 μs · 4 μs · 4 μs

2000

**FIG. 20**

**FIG. 21**

| Ref | | | | | | | | | | | | | | User |
|---|---|---|---|---|---|---|---|---|---|---|---|---|---|---|
| 2102 | L-STF1 | L-LTF1 | L-LTF1 * L-SIG | L-LTF1 * HT-SIG1 | L-LTF1 * HT-SIG2 | VHT-STF1 | LTF1 | LTF1 * VHT-SIG1 | | | Data CD1 | ••• | Data CD1 | user 1 |
| 2104 | L-STF2 | L-LTF2 | L-LTF2 * L-SIG | L-LTF2 * HT-SIG1 | L-LTF2 * HT-SIG2 | VHT-STF1 | LTF1 | LTF1 * VHT-SIG2 | | | Data CD1 | ••• | Data CD2 | user 2 |
| 2106 | L-STF3 | L-LTF3 | L-LTF3 * L-SIG | L-LTF3 * HT-SIG1 | L-LTF3 * HT-SIG2 | VHT-STF1 | LTF1 | LTF1 * VHT-SIG3 | | | Data CD1 | ••• | Data CD3 | user 3 |
| 2108 | L-STF4 | L-LTF4 | L-LTF4 * L-SIG | L-LTF4 * HT-SIG1 | L-LTF4 * HT-SIG2 | VHT-STF1 | LTF1 | LTF1 * VHT-SIG4 | | | Data CD1 | ••• | Data CD4 | user 4 |
| 2110 | L-STF5 | L-LTF5 | L-LTF5 * L-SIG | L-LTF5 * HT-SIG1 | L-LTF5 * HT-SIG2 | VHT-STF1 | LTF1 | LTF1*V HTSIG5 | LTF3 | LTF1 | Data CD1 | ••• | Data CD1 | user 5 |
| 2112 | L-STF6 | L-LTF6 | L-LTF6 * L-SIG | L-LTF6 * HT-SIG1 | L-LTF6 * HT-SIG2 | VHT-STF2 | LTF2 | LTF2*V HTSIG5 | LTF4 | LTF2 | Data CD2 | ••• | Data CD2 | |
| 2114 | L-STF7 | L-LTF7 | L-LTF7 * L-SIG | L-LTF7 * HT-SIG1 | L-LTF7 * HT-SIG2 | VHT-STF3 | LTF3 | LTF3*V HTSIG5 | LTF1 | LTF3 | Data CD1 | ••• | Data CD1 | |
| 2116 | L-STF8 | L-LTF8 | L-LTF8 * L-SIG | L-LTF8 * HT-SIG1 | L-LTF8 * HT-SIG2 | VHT-STF4 | LTF4 | LTF4*V HTSIG5 | LTF2 | LTF4 | Data CD2 | ••• | Data CD2 | |
| | 8 µs | 8 µs | 4 µs | 4 µs | 4 µs | 4 µs | 4 µs | 4 µs | 4 µs | 4 µs | 4 µs | | 4 µs | |

2100

| 2202 | | | | | | | | | | | | | | |
|---|---|---|---|---|---|---|---|---|---|---|---|---|---|---|
| L-STF1 | L-LTF1 | L-LTF1 * L-SIG | L-LTF1 * HT-SIG1 | L-LTF1 * HT-SIG2 | VHT-STF1 | LTF1 | LTF1 * VHTSIG | LTF3 | LTF5 | LTF7 | LTF1 | Data CD1 | ••• | Data CD1 |

| 2204 | | | | | | | | | | | | | | |
|---|---|---|---|---|---|---|---|---|---|---|---|---|---|---|
| L-STF2 | L-LTF2 | L-LTF2 * L-SIG | L-LTF2 * HT-SIG1 | L-LTF2 * HT-SIG2 | VHT-STF2 | LTF2 | LTF2 * VHTSIG | LTF4 | LTF6 | LTF8 | LTF2 | Data CD2 | ••• | Data CD2 |

| 2206 | | | | | | | | | | | | | | |
|---|---|---|---|---|---|---|---|---|---|---|---|---|---|---|
| L-STF3 | L-LTF3 | L-LTF3 * L-SIG | L-LTF3 * HT-SIG1 | L-LTF3 * HT-SIG2 | VHT-STF3 | LTF3 | LTF3 * VHTSIG | LTF5 | LTF7 | LTF1 | LTF3 | Data CD3 | ••• | Data CD3 |

| 2208 | | | | | | | | | | | | | | |
|---|---|---|---|---|---|---|---|---|---|---|---|---|---|---|
| L-STF4 | L-LTF4 | L-LTF4 * L-SIG | L-LTF4 * HT-SIG1 | L-LTF4 * HT-SIG2 | VHT-STF4 | LTF4 | LTF4 * VHTSIG | LTF6 | LTF8 | LTF2 | LTF4 | Data CD4 | ••• | Data CD4 |

| 2210 | | | | | | | | | | | | | | |
|---|---|---|---|---|---|---|---|---|---|---|---|---|---|---|
| L-STF5 | L-LTF5 | L-LTF5 * L-SIG | L-LTF5 * HT-SIG1 | L-LTF5 * HT-SIG2 | VHT-STF5 | LTF5 | LTF5 * VHTSIG | LTF7 | LTF1 | LTF3 | LTF5 | Data CD5 | ••• | Data CD5 |

| 2212 | | | | | | | | | | | | | | |
|---|---|---|---|---|---|---|---|---|---|---|---|---|---|---|
| L-STF6 | L-LTF6 | L-LTF6 * L-SIG | L-LTF6 * HT-SIG1 | L-LTF6 * HT-SIG2 | VHT-STF6 | LTF6 | LTF6 * VHTSIG | LTF8 | LTF2 | LTF4 | LTF6 | Data CD6 | ••• | Data CD6 |

| 2214 | | | | | | | | | | | | | | |
|---|---|---|---|---|---|---|---|---|---|---|---|---|---|---|
| L-STF7 | L-LTF7 | L-LTF7 * L-SIG | L-LTF7 * HT-SIG1 | L-LTF7 * HT-SIG2 | VHT-STF7 | LTF7 | LTF7 * VHTSIG | LTF1 | LTF3 | LTF5 | LTF7 | Data CD7 | ••• | Data CD7 |

| 2216 | | | | | | | | | | | | | | |
|---|---|---|---|---|---|---|---|---|---|---|---|---|---|---|
| L-STF8 | L-LTF8 ˙ | L-LTF8 * L-SIG | L-LTF8 * HT-SIG1 | L-LTF8 * HT-SIG2 | VHT-STF8 | LTF8 | LTF8 * VHTSIG | LTF2 | LTF4 | LTF6 | LTF8 | Data CD8 | ••• | Data CD8 |

| 8 µs | 8 µs | 4 µs | 4 µs | 4 µs | 4 µs | 4 µs | 4 µs | 4 µs | 4 µs | 4 µs | 4 µs | 4 µs | | 4 µs |

2200

**FIG. 22**

EP 2 661 008 A1

2302

| STF1 | LTF1 | LTF3 | LTF5 | LTF7 | LTF1 | VHT-SIG1 CD1 | Data CD1 | ••• | Data CD1 |

2304

| STF2 | LTF2 | LTF4 | LTF6 | LTF8 | LTF2 | VHT-SIG2 CD2 | Data CD2 | ••• | Data CD2 |

2306

| STF3 | LTF3 | LTF5 | LTF7 | LTF1 | LTF3 | VHT-SIG3 CD3 | Data CD3 | ••• | Data CD3 |

2308

| STF4 | LTF4 | LTF6 | LTF8 | LTF2 | LTF4 | VHT-SIG4 CD4 | Data CD4 | ••• | Data CD4 |

2310

| STF5 | LTF5 | LTF7 | LTF1 | LTF3 | LTF5 | VHT-SIG5 CD5 | Data CD5 | ••• | Data CD5 |

2312

| STF6 | LTF6 | LTF8 | LTF2 | LTF4 | LTF6 | VHT-SIG6 CD6 | Data CD6 | ••• | Data CD6 |

2314

| STF7 | LTF7 | LTF1 | LTF3 | LTF5 | LTF7 | VHT-SIG7 CD7 | Data CD7 | ••• | Data CD7 |

2316

| STF8 | LTF8 | LTF2 | LTF4 | LTF6 | LTF8 | VHT-SIG8 CD8 | Data CD8 | ••• | Data CD8 |

| 8 μs | 8 μs | 4 μs | 4 μs | 4 μs | 4 μs | 4 μs | 4 μs | | 4 μs |

2300

**FIG. 23**

Europäisches
Patentamt

European
Patent Office

Office européen
des brevets

**EUROPEAN SEARCH REPORT**

Application Number

EP 13 02 0068

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | RICHARD VAN NEE ET AL: "The 802.11n MIMO-OFDM Standard for Wireless LAN and Beyond", WIRELESS PERSONAL COMMUNICATIONS, KLUWER ACADEMIC PUBLISHERS, DO, vol. 37, no. 3-4, 2 June 2006 (2006-06-02), pages 445-453, XP019410646, ISSN: 1572-834X, DOI: 10.1007/S11277-006-9073-2 * section 2.2; figure 5 * | 1-15 | INV. H04L5/00 H04B7/06 H04B7/04 C08F214/18 |
| X | US 2007/232344 A1 (AOKI TSUGUHIDE [JP] ET AL) 4 October 2007 (2007-10-04) * paragraph [0046]; figure 3 * | 1,3-7, 13-15 | |
| A | N/A: "TGnSync Proposal Technical Specification ; 11-04-0889-07-000n-tgnsync-proposal-technical-specification", IEEE DRAFT; 11-04-0889-07-000N-TGNSYNC-PROPOSAL-TECHNICAL-SPECIFICATION, IEEE-SA MENTOR, PISCATAWAY, NJ USA, vol. 802.11n, no. 7, 8 July 2005 (2005-07-08), pages 1-133, XP017690449, [retrieved on 2005-07-08] * figures 25,28,30 * | 1-15 | TECHNICAL FIELDS SEARCHED (IPC) H04L H04B |
| A | US 2007/097946 A1 (MUJTABA SYED A [US]) 3 May 2007 (2007-05-03) * figure 3 * | 1-15 | |

The present search report has been drawn up for all claims

| Place of search | Date of completion of the search | Examiner |
|---|---|---|
| The Hague | 20 August 2013 | Barrientos Lezcano |

**ANNEX TO THE EUROPEAN SEARCH REPORT
ON EUROPEAN PATENT APPLICATION NO.**

EP 13 02 0068

This annex lists the patent family members relating to the patent documents cited in the above-mentioned European search report.
The members are as contained in the European Patent Office EDP file on
The European Patent Office is in no way liable for these particulars which are merely given for the purpose of information.

20-08-2013

| Patent document cited in search report | | Publication date | Patent family member(s) | | Publication date |
|---|---|---|---|---|---|
| US 2007232344 | A1 | 04-10-2007 | JP<br>US | 2007081702 A<br>2007232344 A1 | 29-03-2007<br>04-10-2007 |
| US 2007097946 | A1 | 03-05-2007 | NONE | | |

EPO FORM P0459

For more details about this annex : see Official Journal of the European Patent Office, No. 12/82

**EP 2 661 008 A1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 61090434 B